# EUROPEAN PATENT APPLICATION

(11) **EP 4 679 647 A1**
(43) Date of publication of application: **14.01.2026**
(21) Application number: 25188511.7
(22) Date of filing: 09.07.2025
(51) Int. Cl.: H02B 11/133, H02B 11/28

(54) **INTERLOCKING AND UNLOCKING DEVICE FOR MAIN SWITCH TROLLEY AND GROUNDING SWITCH, AND SWITCHGEAR COMPRISING SAME**

(30) Priority: 12.07.2024 CN 202410942108
(71) Applicant: ABB SCHWEIZ AG, 5400 Baden (CH)
(72) Inventor: LV, Fuzhi, Xiamen, 361000 (CN); LAI, Jianhui, Xiamen, 361000 (CN)
(74) Representative: Zimmermann & Partner Patentanwälte mbB

(57) **Abstract**

The present invention relates to an interlocking and unlocking device for a main switch trolley and a grounding switch of a switchgear (100, 200), and a switchgear comprising the interlocking and unlocking device. The interlocking and unlocking device comprises an interlocking mechanism and an unlocking mechanism. The interlocking mechanism comprises a first engaging member (12, 207) arranged on an operating shaft (15, 208) of the grounding switch so as to rotate therewith, a second engaging member (10, 209) adapted to engage with or disengage from the first engaging member, and a limiting assembly (101, 2101) arranged at a guide rail of the main switch trolley and capable of limiting the main switch trolley. The second engaging member moves in linkage with the limiting assembly, to realize interlocking of the main switch trolley and the operating shaft when the first engaging member and the second engaging member are in an engaged state. The unlocking mechanism is able to disengage the two members from each other to realize unlocking of the grounding switch and the main switch trolley. The device is able to realize interlocking, and also able to release the interlocking relationship therebetween as required while meeting safety requirements, thus improving testing efficiency and saving labor.

## Description

### Technical Field

The present invention relates to the technical field of switchgear, in particular to a device for interlocking and unlocking between a main switch trolley and a grounding switch of a switchgear.

### Background Art

According to the relevant standards, for example international requirements, a switchgear (also referred to as a switch cabinet) must meet interlock requirements for preventing five types of erroneous operations. According to one of these interlock requirements, a forced mechanical interlocking mechanism is provided between a main switch trolley and a grounding switch, to prohibit closure of the grounding switch when the main switch trolley is at a working position or an intermediate position (i.e. between the working position and a test position, having left the test position), and prohibit movement of the main switch trolley from the test position to the working position when an engagement switch is in a closed state.

After a switchgear has been delivered to a user, handover testing must be performed on-site in accordance with standard requirements. Test items include, for example: current transformer testing; general sensor testing; testing of power frequency withstand voltage and insulating resistance between a main circuit and a circuit breaker break point, power frequency withstand voltage and insulating resistance of auxiliary and control circuits; measurement of main circuit contact resistance; testing of circuit breaker mechanical opening/closing operations and mechanical interlock; testing of circuit breaker electrical opening/closing operations and electrical interlock; testing of minimum action voltage for circuit breaker closing/opening coils; determination of circuit breaker closing/opening times; relay protection device testing and relay interface testing; and inspection of all circuits for wiring correctness, etc. Furthermore, after operating on-site for a number of years, the switchgear will generally undergo periodic maintenance; in general, maintenance check items are similar to handover testing.

Under present conditions, to perform the abovementioned testing, on-site personnel must perform various operations on individual switchgear one by one, such as cranking circuit breakers in and out, opening and closing grounding switches, opening and closing circuit breakers, etc., in order to match subsequent inspection items. Taking as an example the measurement of main circuit resistance, test currents must be applied to two ends of cables and busbars, and due to switchgear interlock requirements, the following series of operations must be performed: circuit breaker opening, cranking out from a working position to a test position; grounding switch closing; cable room door opening, connection of a cable side to a power supply trolley; connection of a busbar side to the power supply trolley; closing the cable room door, grounding switch opening; cranking the circuit breaker in from the test position to the working position, circuit breaker closing; and measurement of circuit resistance. At the end of the test, the abovementioned operations need to be repeated in reverse order. Thus, a large amount of time must be spent on-site to perform various frequent and complicated operations, and a very short power outage window in particular will pose a greater challenge.

### Summary of the Invention

The object of the present invention is to solve at least one of the abovementioned problems and/or other problems in the prior art.

**In** order to achieve the above object, according to one aspect of the present invention, an interlocking and unlocking device for a main switch trolley and a grounding switch of a switchgear is provided. The interlocking and unlocking device comprises an interlocking mechanism and an unlocking mechanism. The interlocking mechanism comprises: a first engaging member arranged on an operating shaft of the grounding switch so as to rotate therewith, wherein the operating shaft of the grounding switch is operably rotatable to control the grounding switch to open or close; a second engaging member adapted to engage with or disengage from the first engaging member; and a limiting assembly, arranged at a guide rail of the main switch trolley and capable of limiting the main switch trolley, wherein the second engaging member moves in linkage with the limiting assembly, to realize interlocking of the main switch trolley and the grounding switch when the first engaging member and the second engaging member are in an engaged state. The unlocking mechanism is able to disengage the first engaging member and the second engaging member from each other to realize unlocking of the grounding switch and the main switch trolley.

In this solution, interlocking of the main switch trolley and the grounding switch can be realized by engaging the first engaging member, which moves in linkage with the operating shaft of the grounding switch, and the second engaging member, which moves in linkage with the limiting assembly (which is able to limit the main switch trolley). Unlocking of the main switch trolley and the grounding switch can be realized as required by disengaging, by means of the unlocking mechanism, the first engaging member, which moves in linkage with the operating shaft of the grounding switch, and the second engaging member, which moves in linkage with the limiting assembly (which is able to limit the main switch trolley). It is thus possible to meet the requirements for movement of the main switch trolley (and a circuit breaker, etc. thereon) and the grounding switch in scenarios where this is required, for example when automatic testing is performed.

According to an example of the present invention, the unlocking mechanism comprises an unlocking member and a transmission member, wherein the transmission member can be coupled to the unlocking member, so as to move under the driving action of the unlocking member, and drive the first engaging member away from the second engaging member.

In this example, unlocking can be realized with a simple and effective structure by using the unlocking member, which can be operated by hand for example, to drive the first engaging member away from the second engaging member, by means of the transmission member.

According to a first embodiment of the present invention, the transmission member is constructed as a sliding sleeve slidably fitted round the operating shaft, wherein the first engaging member is constructed as a first cam and coupled to the sliding sleeve so as to slide therewith; the unlocking member is constructed as an unlocking rod, wherein a hollow chamber is provided in the operating shaft in an axial direction thereof, the unlocking rod being adapted to be pushed into the chamber or withdrawn therefrom; and the unlocking rod is able to push the sliding sleeve in the process of being pushed into the chamber.

In this example, the hollow chamber is formed in the operating shaft, and the unlocking rod is inserted into the chamber and pushes the sliding sleeve slidably fitted round the operating shaft, thereby driving the first engaging member away from the second engaging member to realize unlocking. Components are only provided on and within the existing grounding switch operating shaft, without taking up any additional space, so the unlocking mechanism is simple and compact.

According to a preferred example of the first embodiment, a blocking member is provided on the sliding sleeve, and a groove for accommodating the blocking member to slide therein is correspondingly provided in the operating shaft, the groove extending in the axial direction of the operating shaft, wherein an extremity of the unlocking rod is adapted to push the blocking member, so as to push the sliding sleeve.

According to a preferred example of the first embodiment, the unlocking mechanism further comprises an unlocking rod locking mechanism, arranged on the operating shaft so as to lock the unlocking rod at least when the grounding switch is in a closed state, so that the unlocking rod cannot withdraw from the chamber; preferably, the unlocking rod can be inserted into and withdraw from the chamber only when the grounding switch is in an open state.

In this example, as a result of providing the unlocking rod locking mechanism, withdrawal of the unlocking rod is prevented at least when the grounding switch is in a closed state, while enabling the unlocking function; in particular, it is ensured that the unlocking rod can be inserted and pulled out only when the grounding switch is in an open state, thus further ensuring safety.

According to a preferred example of the first embodiment, the unlocking rod locking mechanism comprises: a second cam, fixed in relation to a housing of the switchgear; a rotary wheel, located at a radially inner side of the second cam and fixed to the operating shaft; and a first elastic member and a first pin arranged in radial through-holes of the rotary wheel and the operating shaft, the first pin being biased toward the second cam by the first elastic member, and the first pin having a radially outer end in contact with a radially inner cam surface of the second cam, and a radially inner end adapted to limit the unlocking rod in a locked position. It should be explained that the term "bias" used herein means that the elastic member continuously acts on, i.e. continuously applies a force (e.g. pressure or tension) to, the relevant member in a particular direction.

In this example, under the action of the second cam, the rotary wheel rotating with the operating shaft enables the first pin to contact the radially inner cam surface of the second cam, so as to slide in and out under the driving action of the radially inner cam surface. Thus, the radially inner end of the first pin limits or does not limit the unlocking rod. Consequently, the unlocking rod locking mechanism has a simple structure.

According to a preferred example of the first embodiment, a main body part and a recessed part of larger internal diameter than the main body part are provided on the radially inner cam surface, the recessed part being positioned so that: when the operating shaft is in a position that causes the grounding switch to be open, the radially outer end of the first pin abuts the recessed part and the radially inner end of the first pin does not limit the unlocking rod, and when the operating shaft is in a position that causes the grounding switch to leave the open state, the radially outer end of the first pin abuts the main body part and the radially inner end of the first pin limits the unlocking rod in the locked position.

The structural configuration of the radially inner cam surface of the second cam in this example ensures that the unlocking rod can only be inserted into the unlocking rod to enter an unlocked state, and can only be pulled out, if the grounding switch is in the open position.

According to a preferred example of the first embodiment, a limiting groove is formed in the unlocking rod, and the radially inner end of the first pin extends into the limiting groove in the locked position.

According to a preferred example of the first embodiment, the unlocking rod locking mechanism further comprises a limiting member, arranged in the rotary wheel so as to limit same in an axial direction of the rotary wheel. This structure can position the rotary wheel more effectively, so that the unlocking rod locking mechanism operates reliably.

According to a preferred example of the first embodiment, the unlocking mechanism further comprises a second elastic member for causing the sliding sleeve and the first engaging member to return. When the unlocking rod is pulled out, the second elastic member pushes the sliding sleeve and the first engaging member to return, so that the first engaging member and the second engaging member re-engage, thus restoring the interlock function between the main switch trolley and the grounding switch.

According to a preferred example of the first embodiment, the unlocking mechanism further comprises an unlocked state sensing element, configured to be able to sense an engaged or disengaged state of the first engaging member and the second engaging member. This exemplary structure makes it possible to sense the unlocked state and issue a signal, thus facilitating the execution of other control operations that require such a signal.

According to a preferred example of the first embodiment, the unlocking mechanism further comprises a proportional amplification micro-motion member located between the first engaging member and the unlocked state sensing element, to transmit movement of the first engaging member in amplified form to the unlocked state sensing element. This exemplary structure makes it possible to sense the unlocked state with greater sensitivity.

According to a preferred example of the first embodiment, the interlocking mechanism further comprises a rotary rod and a fourth elastic member for causing the rotary rod to return, wherein the limiting assembly is arranged on the rotary rod, so as to be able to swing between an extended position, in which the main switch trolley is limited, and a retracted position, as the rotary rod rotates, wherein a first end of the second engaging member is adapted to engage with or disengage from the first engaging member, and a second end opposite the first end of the second engaging member is coupled to the rotary rod.

The interlocking mechanism in this example is simple and reliable, enabling the limiting assembly to move in linkage with the second engaging member, and thus with the first engaging member arranged on the operating shaft. When the first engaging member and the second engaging member are in an engaged state, the grounding switch operating shaft and the limiting assembly are able to move in linkage, thus realizing interlocking of the main switch trolley and the grounding switch.

According to a preferred example of the first embodiment, the limiting assembly is arranged at the opposite side of the guide rail from the main switch trolley, and comprises a first protruding member; in the extended position, the first protruding member protrudes through a first opening in the guide rail to brake a driving member of the main switch trolley, thereby preventing movement of the main switch trolley so as to lock same in a test position; in the retracted position, the first protruding member does not protrude beyond the guide rail.

According to a preferred example of the first embodiment, the limiting assembly further comprises a second protruding member; when the main switch trolley is in the test position, the limiting assembly is able to move into the extended position, in which the second protruding member passes through a second opening in the guide rail and protrudes from the guide rail; in the retracted position, the second protruding member, blocked by the main switch trolley, does not protrude beyond the guide rail.

According to a preferred example of the first embodiment, the interlocking and unlocking device further comprises an operating member arranged near an end of the operating shaft and able to be pressed down and return, the operating member being coupled to the rotary rod by means of a transmission component; when the operating member is pressed down, the rotary rod is driven to rotate, and when the operating member is released, the fourth elastic member drives the rotary rod to rotate so as to cause the operating member to return; when the operating member is in a pressed-down state, the hollow chamber of the operating shaft is exposed to enable insertion of the unlocking rod.

In this example, the operating member moving in linkage with the rotary rod ensures that the unlocking rod cannot be inserted to perform unlocking when the main switch trolley is not in the test position. Moreover, with reference to the configuration of the unlocking rod locking mechanism in the example above, it is ensured that the unlocking rod can be inserted into the operating shaft to enter the unlocked state only when the main switch trolley is located in the test position and the grounding switch is in the open position.

According to a preferred example of the first embodiment, a first blocking part is provided on the operating member, and a second blocking part is provided on the unlocking rod; in a state in which the unlocking rod has been inserted and the operating member has returned, the first blocking part abuts the second blocking part, so as to block withdrawal of the unlocking rod from the hollow chamber.

In this example, if the main switch trolley moves away from the test position after the unlocking rod has been inserted and performed unlocking, the rotary rod cannot cause the second protruding member and the first protruding member to rotate in such a direction as to protrude from the guide rail, i.e. the operating member is blocked and cannot be pressed down; and due to the interaction of the first blocking part and the second blocking part, the unlocking rod cannot be pulled out. Thus, it is ensured that once the unlocking rod has been inserted and performed unlocking, if the main switch trolley leaves the test position (i.e. is in a working position/intermediate position), the unlocking key will be unable to be pulled out, so as to maintain the unlocked state; this further ensures safety of operation in the unlocked state.

According to a preferred example of the first embodiment, the interlocking and unlocking device further comprises a cover plate slidably arranged on the operating member and adapted to cover an inlet of the hollow chamber, and a third elastic member connecting the cover plate and the operating member, wherein the third elastic member biases the cover plate toward the inlet.

The cover plate in this example is used to cover the inlet of the hollow chamber when the unlocking rod is not inserted, to prevent foreign matter from entering the operating shaft and improve appearance.

According to a preferred example of the first embodiment, the transmission component comprises a coupling rod, wherein an end of one of the coupling rod and the rotary rod is accommodated in an internal hole of the other, and a second pin shaft is provided on this end; a circumferential groove adapted to have the second pin shaft slide therein is provided in said other, the circumferential groove and the second pin shaft being configured such that: when the operating member is pressed down, the coupling rod drives the rotary rod to rotate; when the operating member returns under the action of the fourth elastic member, the rotary rod drives the coupling rod to rotate; when the second engaging member drives the rotary rod to rotate, the second pin shaft slides in the circumferential groove and does not drive the coupling rod.

In this example, the above-described structure between the coupling rod and the rotary rod ensures that rotation of the rotary rod driven by the grounding switch operating shaft will not be transmitted to the operating member, so will not affect it. For example, the second pin shaft may be arranged at one end of the circumferential groove, so that for example, the rotary rod is driven to rotate clockwise when the coupling rod rotates clockwise; the coupling rod is driven to rotate anticlockwise when the rotary rod rotates anticlockwise; and when the rotary rod rotates clockwise under the action of the second engaging member, the coupling rod cannot be driven to rotate because the second pin shaft slides in the circumferential groove.

According to a preferred example of the first embodiment, the second end of the second engaging member is coupled to the rotary rod by means of a first swinging member, wherein an arc-shaped groove is formed on the second end, and a first pin shaft adapted to slide in the arc-shaped groove is provided on the first swinging member, the arc-shaped groove and the first pin shaft being configured such that: when the second engaging member is engaged with the first engaging member and moves under the driving action of the operating shaft, the second engaging member drives the first swinging member to drive the rotary rod to rotate; when the rotary rod is driven by the operating member or by the fourth elastic member to rotate, the first pin shaft of the first swinging member driven by the rotary rod slides in the arc-shaped groove and does not drive the second engaging member.

Adopting the structure in this example, the first pin shaft may for example be located at a furthest end, remote from the first engaging member, of the arc-shaped groove, ensuring that movement of the rotary rod under the operating action of the operating member will not be transmitted to the second engaging member, so will not affect rotation of the second engaging member and the operating shaft.

According to a second embodiment of the present invention, the first engaging member is constructed as a cam, which is slidably fitted round the operating shaft and rotates with the operating shaft, and the second engaging member is constructed as a slider capable of sliding under the action of the cam, wherein the slider moves in linkage with the limiting assembly. In this example, a simple and effective structure enables the operating shaft to move in linkage with the limiting assembly.

According to a preferred example of the second embodiment, the unlocking member is constructed as a rotatable unlocking key, and the unlocking mechanism further comprises a guide sleeve with a channel formed therein for the unlocking key, and an actuating core arranged on the guide sleeve, wherein the unlocking key is adapted to pass through the channel and engage with the actuating core, and the actuating core is able, under the operating action of the unlocking key, to push the transmission member to drive the first engaging member.

According to a preferred example of the second embodiment, the unlocking mechanism is arranged below a partition plate of a compartment for the main switch trolley, and located at the same side of the guide rail as the main switch trolley, wherein the unlocking mechanism comprises a control assembly capable of controlling operation of the unlocking key according to a position of the main switch trolley, the control assembly being able to partially project to a region above the partition plate, so as to be adapted to be pressed down by the main switch trolley located in a test position.

According to this example, the control assembly capable of controlling operation of the unlocking key can be pressed down or released by the position of the main switch trolley, so the state of the unlocking key is controlled directly by the position of the main switch trolley in a convenient way.

According to a preferred example of the second embodiment, the control assembly comprises a rolling wheel capable of at least partially projecting to the region above the partition plate, a sixth elastic member which biases the rolling wheel toward the main switch trolley, and a blocking member adapted to enter or leave the channel, wherein, when the main switch trolley is in the test position, the rolling wheel is pressed down, driving the blocking member to leave the channel, and thereby allowing the unlocking key to enter the channel.

The structure in this example reliably ensures that insertion of the unlocking key is only allowed when the main switch trolley is in the test position.

According to a preferred example of the second embodiment, the control assembly further comprises a limiting plate coupled to the rolling wheel; a first slot and a second slot of smaller width than the first slot are formed on the limiting plate, wherein, when the main switch trolley is in the test position, the rolling wheel is pressed down, and the actuating core passes through the first slot, allowing the actuating core and the unlocking key to rotate; when the main switch trolley is not in the test position, the rolling wheel is sprung up by the sixth elastic member, and the actuating core passes through the second slot, preventing rotation of the actuating core and the unlocking key.

The structural configuration of the limiting plate in this example ensures that if the trolley leaves the test position when the unlocking key has been inserted but not yet turned to reach the stable unlocked state, the unlocking key will not be able to turn for unlocking, and instead will be sprung out. Furthermore, if the main switch trolley leaves the test position after the unlocking key has been inserted and turned to reach the stable unlocked state, the rolling wheel will be sprung up by the sixth elastic member, and the actuating core will pass through the limiting plate at the position of the second slot, preventing rotation of the actuating core and the unlocking key. Thus, the unlocking key cannot turn back, and so cannot be pulled out. This also ensures that if the main switch trolley leaves the test position (i.e. is in the working position/intermediate position) after the unlocking key has been inserted and performed unlocking, the unlocking key cannot be pulled out. This further ensures safe operation in the unlocked state.

According to a preferred example of the second embodiment, a wall of the guide sleeve is provided with an axial guide groove, and a circumferential guide groove extending from an end of the axial guide groove that is remote from an inlet of the channel; and a pin that slides in the axial guide groove and the circumferential guide groove is provided on the actuating core.

The structure in this example ensures that after being inserted to perform unlocking, the unlocking key can be held in a stable unlocked state.

According to a preferred example of the second embodiment, a protrusion is provided on the unlocking key, and the following are formed in the channel of the guide sleeve: a keyway for the protrusion to slide in, and a step face for abutting the protrusion; once the unlocking key has been inserted to a position where it is engaged with the actuating core and has pushed the actuating core along the axial guide groove and to rotate along the circumferential guide groove, the protrusion abuts the step face, and the unlocking key is limited in an unlocked position.

According to a preferred example of the second embodiment, the actuating core comprises an engaging part with a prism-shaped or irregularly shaped cross section, and the engaging part is adapted to pass through the first slot or the second slot.

According to a preferred example of the second embodiment, the transmission member is constructed to be pivotable and comprises a leg part adapted to engage with the cam, and an end of the actuating core is adapted to push against the transmission member.

According to a preferred example of the second embodiment, the interlocking and unlocking device further comprises a seventh elastic member, arranged on the operating shaft so as to push the cam to return.

According to a preferred example of the second embodiment, the unlocking mechanism further comprises a locking member, wherein the cam comprises a first engaging part adapted to act on the locking member, the unlocking mechanism further comprises a fifth elastic member for causing the locking member to return, and the locking member reciprocates under the action of the cam and the fifth elastic member, so as to move between a position where the unlocking key is allowed to rotate and a position where rotation thereof is prevented.

The locking member in this example limits rotation, insertion and withdrawal of the unlocking key, thus ensuring that the unlocking key can only be operated under safe conditions.

According to a preferred example of the second embodiment, a first opening part, and a second opening part of greater width than the first opening part, are formed in the locking member; the first opening part is constructed to allow the actuating core to pass therethrough but prevent rotation thereof, and the second opening part is constructed to allow the actuating core to pass therethrough and allow the actuating core and the unlocking key to rotate.

The locking member with such a structure ensures that if the operating shaft rotates to close the grounding switch when the unlocking key has already been inserted but not yet turned to reach the stable unlocked state, the unlocking key cannot turn to the stable unlocked state, and instead is sprung out. It is thus ensured that the unlocking key can only be inserted and enter the stable unlocked state if the main switch trolley is in the test position and the grounding switch is open. Furthermore, if the grounding switch is closed after the unlocking key has been inserted and turned to reach the stable unlocked state, the actuating core will pass through the position of the first opening part; at this position, the first opening part prevents rotation of the actuating core and the unlocking key, so the unlocking key cannot turn back and be pulled out. This ensures that the unlocking key cannot be pulled out in a state in which the grounding switch is closed after the unlocking key has been inserted and performed unlocking, so safety in the unlocked state is improved.

According to a preferred example of the second embodiment, the cam further comprises a second engaging part adapted to act on the slider, and the first engaging part and the second engaging part are constructed so that: when the cam has already been moved to a position where the second engaging part is disengaged from the slider, the first engaging part is still able to engage with the locking member.

In this example, in an unlocked state in which the cam has already been moved to a position where the second engaging part thereof is disengaged from the slider, withdrawal of the unlocking key when the grounding switch is in a closed state is still prevented by the interaction of the first engaging part of the cam with the locking member.

According to a preferred example of the second embodiment, the first engaging part and the second engaging part are constructed as columnar parts protruding from a main body of the cam, and the columnar part serving as the first engaging part has a greater length than the columnar part serving as the second engaging part.

According to a preferred example of the second embodiment, the unlocking mechanism comprises a housing, the housing being fixed below the partition plate, and components of the unlocking mechanism are arranged in the housing. This structure realizes the unlocking mechanism in a compact and safe way.

According to a preferred example of the second embodiment, the interlocking mechanism further comprises a rotary rod, the slider being coupled to the rotary rod by means of a transmission component, wherein the limiting assembly is arranged on the rotary rod so as to be able to swing between an extended position, in which the main switch trolley is limited, and a retracted position, as the rotary rod rotates.

According to a preferred example of the second embodiment, the limiting assembly is arranged at the opposite side of the guide rail from the main switch trolley, and comprises a first protruding member; in the extended position, the first protruding member protrudes through a first opening in the guide rail to brake a driving member of the main switch trolley, thereby preventing movement of the main switch trolley so as to lock same in the test position; in the retracted position, the first protruding member does not protrude beyond the guide rail.

According to a preferred example of the second embodiment, the limiting assembly further comprises a second protruding member; when the main switch trolley is in the test position, the limiting assembly is able to move into the extended position, in which the second protruding member passes through a second opening in the guide rail and protrudes from the guide rail; in the retracted position, the second protruding member, blocked by the main switch trolley, does not protrude beyond the guide rail.

According to another aspect of the present invention, a switchgear is provided, comprising a main switch trolley, a grounding switch, and an interlocking and unlocking device according to any one of the examples above. In the switchgear, the interlocking and unlocking device enables the switchgear to meet interlock requirements under normal circumstances, thus ensuring safety, and release the interlocking between the grounding switch and the main switch trolley as necessary in scenarios where this is required, so that operation is convenient. For example, automatic testing and automatic implementation of inspections are facilitated, testing efficiency is improved, and manpower is saved. Furthermore, the various structures in the interlocking and unlocking device described above fully ensure the safety of the switchgear during unlocking operations.

### Brief Description of the Drawings

A clear understanding of the features and advantages of the present invention will be gained from the detailed description provided below with reference to the drawings. It is to be understood that the following drawings are merely schematic and not necessarily drawn to scale, so must not be regarded as limiting the present invention. In the drawings:
Fig. 1 shows a main view of a switchgear according to a first embodiment of the present invention, in which part of an outer housing has been hidden for the purpose of showing internal components.
Fig. 2 shows a schematic drawing of an interlocking and unlocking device according to the first embodiment of the present invention, in which the trolley is in the test position, the grounding switch is in an open state, and the unlocking rod is in an inserted state.
Fig. 3 shows a sectional view along line I-I in Fig. 2.
Figs. 4A, 4B and 4C respectively show sectional views along line A-A, line B-B and line C-C in Fig. 2.
Figs. 5A, 5B and 5C respectively show enlarged schematic drawings of region P in Fig. 2, and regions O and M in Fig. 3.
Figs. 6A, 6B and 6C show a sectional view along line K-K in Fig. 2, and enlarged schematic drawings of region L in Fig. 2 and region N in Fig. 3.
Fig. 7 shows a view of Fig. 2 from the left.
Fig. 8 shows a schematic drawing of the interlocking and unlocking device according to the first embodiment of the present invention, in which the trolley is in the test position, the unlocking rod is inserted, and the grounding switch is in a closed state.
Fig. 9 shows a sectional view along line Q-Q in Fig. 8.
Figs. 10A and 10B show a sectional view along line R-R in Fig. 8 and an enlarged schematic drawing of region S in Fig. 9.
Fig. 11 shows a 3D schematic drawing of the interlocking and unlocking device according to the first embodiment of the present invention.
Fig. 12 shows a partial 3D schematic drawing of the guide rail in Fig. 11.
Fig. 13 shows an exploded schematic drawing of the structure in Fig. 12.
Fig. 14 shows a partial 3D schematic drawing of the first engaging member in Fig. 11.
Fig. 15 shows a 3D exploded schematic drawing of the first engaging member in Fig. 11.
Fig. 16 shows 3D exploded schematic drawing of the operating member in Fig. 11.
Fig. 17 shows a 3D schematic drawing of a switchgear according to a second embodiment of the present invention.
Fig. 18 shows a main view of the switchgear according to the second embodiment, in which part of an outer housing has been hidden for the purpose of showing internal components, and the main switch trolley is in the test position.
Fig. 19 shows a main view of the switchgear according to the second embodiment, in which the main switch trolley is in the working position.
Fig. 20 shows a 3D schematic drawing of an interlocking and unlocking device according to the second embodiment of the present invention, in which a horizontal partition plate of a main switch trolley chamber is shown.
Fig. 21 shows a view of Fig. 20 from another angle.
Fig. 22 shows a 3D schematic drawing of the interlocking and unlocking device according to the second embodiment of the present invention.
Fig. 23 shows a view of Fig. 22 from another angle.
Fig. 24 shows a partial 3D schematic drawing of Fig. 22, with the guide rail removed.
Fig. 25 shows a view of Fig. 24 from another angle.
Fig. 26 shows a 3D schematic drawing of some of the components of the unlocking mechanism.
Fig. 27 shows a view of Fig. 26 from above.
Fig. 28 shows a 3D schematic drawing of the unlocking key, guide sleeve and actuating core.
Fig. 29 shows a view of Fig. 28 from another angle.
Fig. 30 shows 3D schematic drawings from two angles, and a perspective schematic drawing, of the guide sleeve.
Fig. 31 shows a 3D schematic drawing of the actuating core.
Fig. 32 shows a 3D schematic drawing of the locking member.
Figs. 33A and 33B respectively show a 3D schematic drawing and a front view of the control assembly.
Fig. 34 shows a 3D schematic drawing of the transmission member according to the second embodiment of the present invention.
Fig. 35 shows 3D schematic drawings, from two angles, of the first engaging member, i.e. the cam according to the second embodiment of the present invention.

### Detailed Description of the Invention

Specific embodiments of the invention are described below with reference to the accompanying drawings. In the following description, numerous specific details are set forth in order to enable those skilled in the art to more fully understand and implement the invention. It will be apparent to those skilled in the art, however, that the invention may be implemented without some of these specific details. In addition, it is to be understood that the invention is not limited to the particular embodiments described. Rather, the use of any combination of the features and elements described below may be contemplated for implementing the invention, whether or not they relate to different embodiments.

The term "coupling" herein refers to various ways in which different elements can be associated so that they move in a linked manner, including direct fixed connection, rotatable connection, abutment, overlapping connection, or other ways of enabling linked movement directly between two elements, and also including ways of associating two elements with each other indirectly via one or more intermediate element to enable linked movement.

As described in the background art, in order to perform various tests of switchgear, various complex operations are required to be performed manually. To avoid the abovementioned complex manual operations, an automatic testing scheme may be employed. The automatic testing scheme requires that a grounding switch be able to open and close when a main switch trolley (carrying a circuit breaker, isolation trolley, contactor, etc.) is at a working position, and requires that the main switch trolley be able to move between the working position and a test position when the grounding switch is at a closed position, while permitting circuit breaker opening/closing operations.

Thus, there is a need to design an unlocking device that is capable, under specific circumstances, of quickly and effectively releasing a mechanical interlock between the main switch trolley and the grounding switch, while fully ensuring safety.

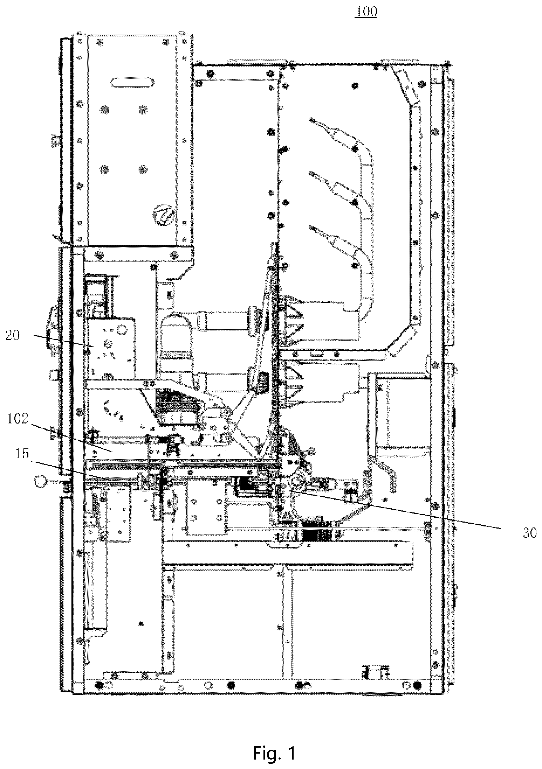

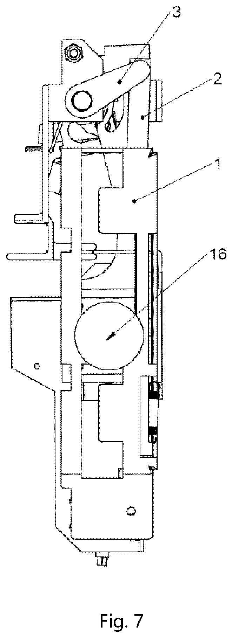

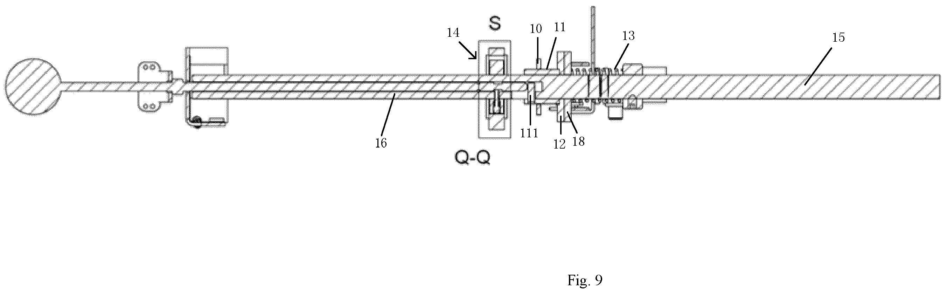

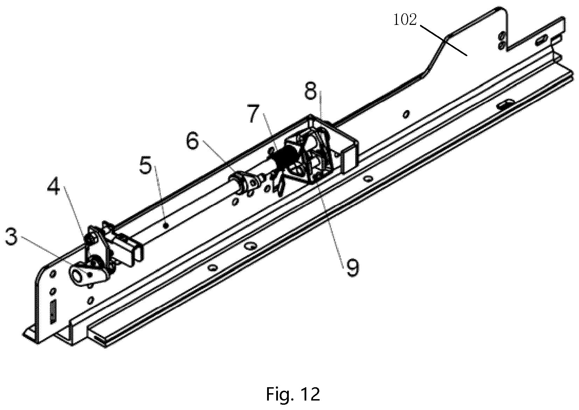

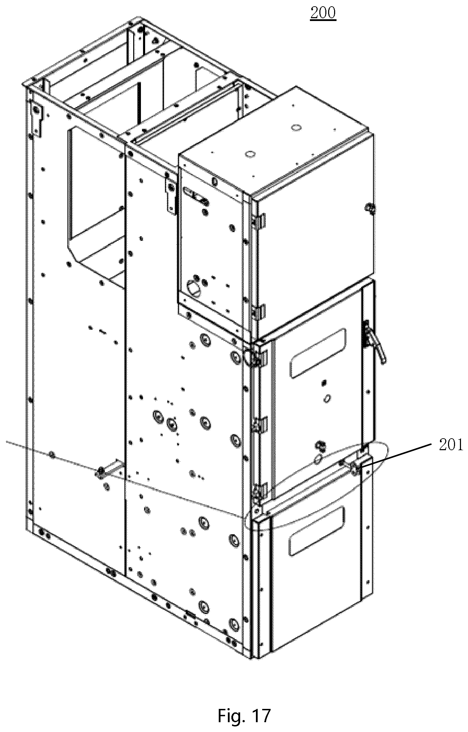

The concept of the present invention is explained below by means of an interlocking and unlocking device for a main switch trolley and a grounding switch of a switchgear 100 according to a first embodiment as shown in Figs. 1 - 16, and an interlocking and unlocking device for a main switch trolley and a grounding switch of a switchgear 200 according to a second embodiment as shown in Figs. 17 - 35. A circuit breaker, an isolation trolley and a contactor, etc. are carried on a chassis of the main switch trolley, which is located in a trolley room and movable along a guide rail between a test position and a working position.

The relevant standards, such as international standard IEC 60694 Common specifications for high-voltage switchgear and controlgear standard (5.11 Interlocking devices), national standard GB_T 3906-2020 "3.6 kV - 40.5 kV AC metal-enclosed switchgear and controlgear" (Section 6.13, Interlocking devices), national standard GB_T 11022-2020 "Common technical requirements for high-voltage AC switchgear and controlgear standards" (Section 6.12, Interlocking devices), and industry standard "Twenty-five key requirements for preventing major incidents in electricity production" (National Energy Administration, Sections 3.1.1, 3.1.10 and 3.1.11), all have interlock requirements for switchgear.

The following table shows function requirements for quintuple prevention interlocking in the national standards, and the interlock and unlock functions to which the present invention relates, wherein the unlock function performs unlocking for states A and B in the third interlock function.

| **Quintuple prevention interlock function requirements** | | | | **Un lock function** | | | |
|---|---|---|---|---|---|---|---|
| | | **State** | **Prohibited** | | | **State** | **Prohibited** |
| 1 | A | Main switch closed | Move main switch trolley in/out | 1 | A | Main switch closed | Move main switch trolley in/out |
| | B | Main switch trolley in non-test/working position | Close main switch | | B | Main switch trolley in non-test/working position | Close main switch |
| 2 | A | Secondary aviation plug not plugged in properly | Move main switch trolley in | 2 | A | Secondary aviation plug not plugged in properly | Move main switch trolley in |
| | B | Main switch trolley in working/ intermediate position | Pull out secondary aviation plug | | B | Main switch trolley in working/intermediate position | Pull out secondary aviation plug |
| 3 | A | Main switch trolley in working/intermediate position | Close grounding switch | 3 | A | | |
| | B | Grounding switch closed | Move main switch trolley in | | B | | |
| 4 | A | Main switch trolley in working/intermediate position | Open main switch chamber door | 4 | A | Main switch trolley in working/intermediate position | Open main switch chamber door |
| | B | Main switch chamber door open | Move main switch trolley in | | B | Main switch chamber door open | Move main switch trolley in |
| 5 | A | Grounding switch open | Open cable chamber door | 5 | A | Grounding switch open | Open cable chamber door |
| | B | Cable chamber door open | Open grounding switch | | B | Cable chamber door open | Open grounding switch |

To satisfy the requirements for quintuple prevention interlocking in the national standards, the present invention provides an interlocking mechanism for use between the main switch trolley and the grounding switch, which is able to realize at least the following interlock functions in an interlocking state: if the main switch trolley is not in its test position, the grounding switch cannot be closed; if the grounding switch is closed, the main switch trolley is limited to being at the test position by a limiting assembly and cannot move from the test position to the working position. Furthermore, in order to enable an unlock function whereby the abovementioned interlocking of the main switch trolley and the grounding switch is released if required, the present invention also designs an unlocking mechanism, i.e. provides an interlocking and unlocking device. An unlocked state at least enables movement of the main switch trolley to be independent of opening or closing of the grounding switch. The first embodiment and the second embodiment of the present invention herein both relate to an interlocking and unlocking device, which is not only able to realize interlocking of the main switch trolley and the grounding switch, to meet the requirements of quintuple prevention interlocking, but also able to release the interlocking relationship therebetween as required while meeting safety requirements in appropriate scenarios, e.g. in scenarios where automatic testing is performed.

It should be explained that, although a particular component will sometimes be classified as an interlocking mechanism or an unlocking mechanism for convenience of description herein, the function of this component is in fact determined by the function which it serves in the interlocking and unlocking device as a whole, and is not defined by its description as being classified as an interlocking mechanism or an unlocking mechanism; essentially, it is subordinate to the interlocking and unlocking device of the present invention.

### First embodiment

Fig. 1 shows an exemplary switchgear 100. As shown in the figure, a circuit breaker 20 is arranged on a main switch trolley. The main switch trolley is able to move along a guide rail 102 to a working position, or move out to a test position from the working position. Fig. 1 also shows an operating shaft 15 of a grounding switch; the operating shaft 15 can be driven electrically, so as to drive the grounding switch 30 to realize closing and opening thereof. The operating shaft 15 can also be operated manually, so as to manually close or open the grounding switch if necessary, for example in an emergency.

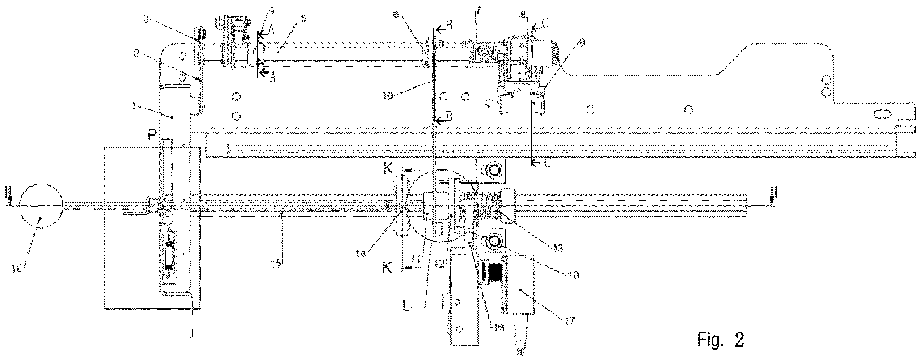

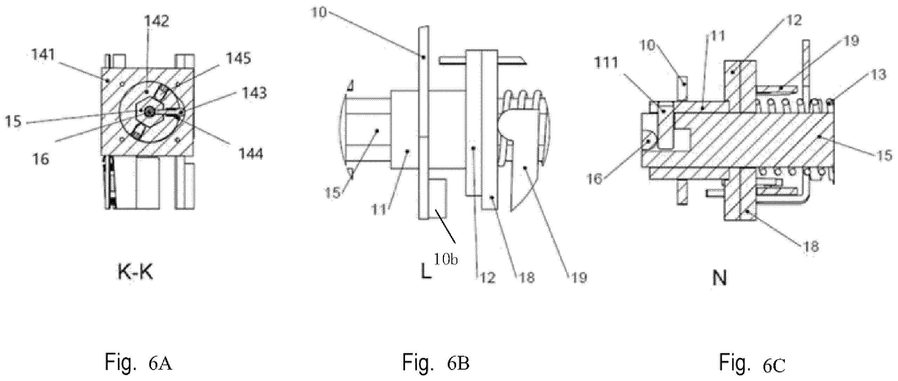

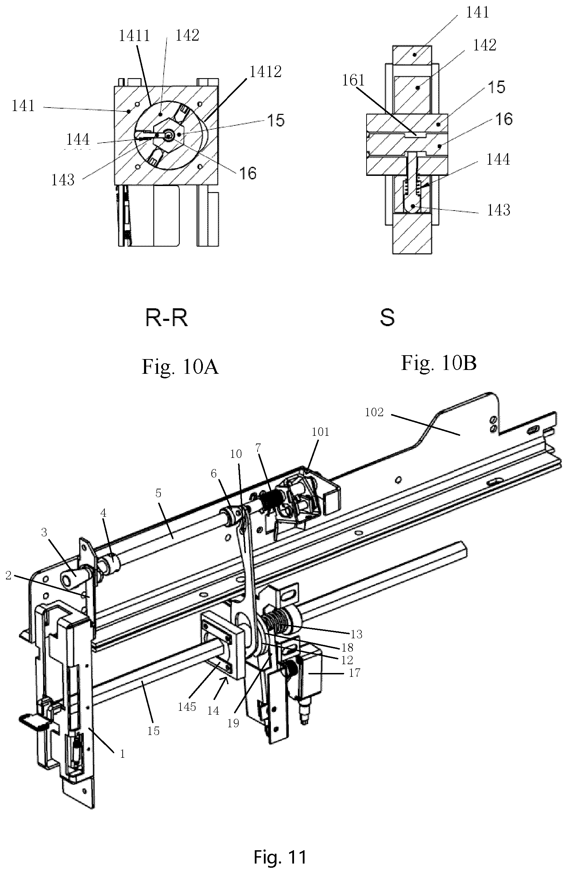

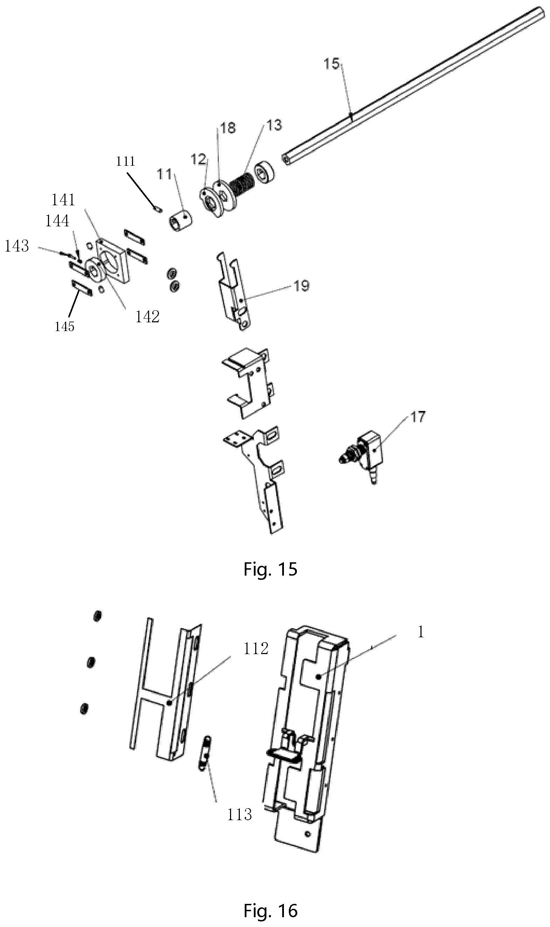

As shown in Figs. 2 - 16, an interlocking structure in this embodiment comprises a first engaging member 12, which is arranged on the operating shaft 15 of the grounding switch and able to rotate with the operating shaft 15. The first engaging member 12 is constructed as a cam (as can be seen in Fig. 15), having a cam face adapted to engage with a second engaging member 10, for example to abut a columnar body 10b at a first end of the second engaging member 10 (see view L in Fig. 6B), so as to pull the second engaging member 10. The interlocking mechanism further comprises a rotary rod 5, and a fourth elastic member 7 for causing the rotary rod 5 to return. The first end of the second engaging member 10 constructed as a long rod in this embodiment is adapted to engage with or disengage from the first engaging member 12, and a second end of the second engaging member opposite the first end thereof is coupled to the rotary rod 5 (see Fig. 11).

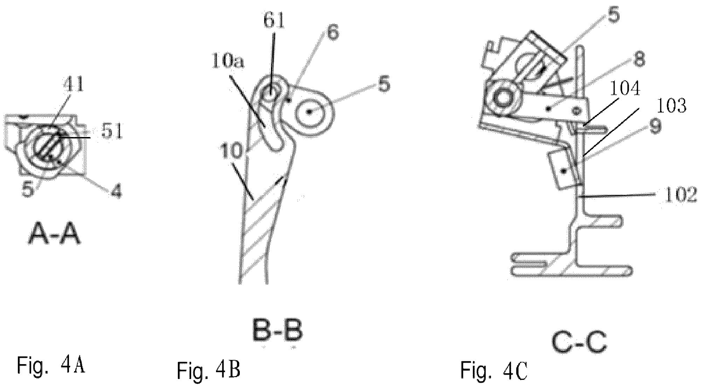

As shown in Fig. 11 and view B-B in Fig. 4B, the second end of the second engaging member 10 may be coupled to the rotary rod 5 by means of a first swinging member 6. An arc-shaped groove 10a is formed on the second end of the second engaging member 10, and a first pin shaft 61 adapted to slide in the arc-shaped groove 10a is provided on the first swinging member 6. The arc-shaped groove 10a and the first pin shaft 61 are configured so that: when the second engaging member 10 is engaged with the first engaging member 12 and moves under the driving action of the operating shaft 15, the second engaging member 10 drives the first swinging member 6 to drive the rotary rod 5 to rotate, but when the rotary rod 5 is driven by an operating member 1 (described below) or by the fourth elastic member 7 to rotate, the first pin shaft 61 of the first swinging member 6 driven by the rotary rod 5 does not drive the second engaging member 10, because the first pin shaft slides in the arc-shaped groove 10a. As shown in Figs. 11 and 4B, the first pin shaft 61 may be located at a furthest end, remote from the first end, of the arc-shaped groove 10a.

As shown in Fig. 11, a limiting assembly 101 is arranged on the rotary rod 5, so as to be able to swing between an extended position, in which the main switch trolley is limited, and a retracted position, as the rotary rod 5 rotates. As shown in Figs. 2, 4C, 11 and 12, the limiting assembly 101 is arranged at the opposite side of the guide rail 102 from the main switch trolley, and comprises a first protruding member 9 (see view C-C in Fig. 4C) for locking the trolley in the test position. In the extended position, the first protruding member 9 protrudes through a first opening 103 in the guide rail 102 to brake (e.g. by means of an intermediate transmission member) a driving member (not shown in the figures) of the main switch trolley, thereby preventing movement of the main switch trolley so as to lock it in the test position. In the retracted position, the first protruding member 9 does not protrude beyond the guide rail 102. The limiting assembly 101 further comprises a second protruding member 8 for trolley position inspection. When the main switch trolley is in the test position, the limiting assembly 101 can move into the extended position, in which the second protruding member 8 passes through a second opening 104 in the guide rail 102 and protrudes from the guide rail; in the retracted position, the second protruding member 8, blocked by the main switch trolley, does not protrude beyond the guide rail 102. It should be explained that when the main switch trolley is in the test position, a corresponding recess is provided on a chassis of the main switch trolley at a position corresponding to the limiting assembly 101, thereby allowing the second protruding member 8 and the first protruding member 9 to extend through the guide rail into the recess. However, when the main switch trolley is not in the test position, the chassis thereof will prevent the second protruding member 8 and the first protruding member 9 from protruding.

When an unlocking member 16 in this embodiment (an unlocking rod in the first embodiment) is not inserted and thus does not perform an unlocking action, the interlocking mechanism in the interlocking and unlocking device operates normally. When the grounding switch is in a closed state, the main switch trolley is unable to move from the test position to the working position. At a position where the main switch trolley has left the test position, the grounding switch cannot close.

For better understanding of the structure, an operation when the trolley is in the test position and the grounding switch is closed, in a state in which the unlocking rod is not inserted to perform unlocking, is described at this position. Referring to Fig. 11, an electric motor of the grounding switch drives the operating shaft 15 of the grounding switch to rotate 180 degrees clockwise, the grounding switch closes, the operating shaft 15 drives the first engaging member 12, i.e. the first cam to rotate 180 degrees, the first cam pulls the second engaging member 10 to move downwards, the second engaging member 10 pulls the first swinging member 6 to rotate, and the rotation of the first swinging member 6 drives the rotary rod 5 to rotate. As it rotates, the rotary rod 5 drives the second protruding member 8 in the limiting assembly 101 to move through the second opening in the guide rail 102 toward the main switch trolley (into a cabinet chamber where the main switch trolley is located; with the trolley in the test position, the second protruding member 8 can move into the cabinet), and at the same time drives the first protruding member 9 to move into the cabinet (with the trolley in the test position, the first protruding member 9 can move into the cabinet), so as to press against a threaded rod of the trolley and lock it; the trolley threaded rod cannot be cranked, so the main switch trolley is braked, and thus prevented from leaving the test position and moving to the working position. Correspondingly, it can also be seen from the above process that if the main switch trolley is not in the test position, the second protruding member 8 will be unable to protrude beyond the guide rail due to the blocking action of the chassis of the main switch trolley, so rotation of the rotary rod 5 is restricted, and the operating shaft 15 is thus unable to realize the abovementioned clockwise rotation to realize closing of the grounding switch.

An unlocking mechanism in the interlocking and unlocking device is described in detail below; the unlocking mechanism is able to disengage the first engaging member 12 and the second engaging member 10 from each other, to realize unlocking of the grounding switch operating shaft 15 and the main switch trolley. Demonstratively, in this unlocked state, movement of the main switch trolley is independent of opening or closing of the grounding switch. This enables the grounding switch to be opened or closed when the main switch trolley is in the working position, and the main switch trolley to be cranked in or out between the test position and the working position when the grounding switch is in a closed state, as required.

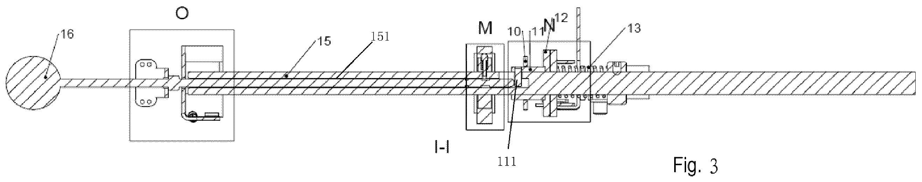

The unlocking mechanism comprises an unlocking member 16 and a transmission member 11. The transmission member 11 is able to couple with the unlocking member 16, so as to move under the driving action of the unlocking member 16 and drive the first engaging member 12 away from the second engaging member 10, so that the two engaging members disengage from each other. In the first embodiment, as shown in Figs. 2 - 9, the transmission member 11 is constructed as a sliding sleeve that is slidably connected to the operating shaft 15. The first engaging member 12, i.e. the first cam is connected to the sliding sleeve, or is able to be pushed by the sliding sleeve to slide therewith. The unlocking member 16 is constructed as an unlocking rod. As shown in Figs. 2 and 3, a hollow chamber 151 is provided in the operating shaft 15 in the axial direction thereof, and the unlocking member 16, i.e. the unlocking rod is adapted to be pushed into the chamber 151 or withdrawn therefrom. A blocking member 111 (shown clearly in view N in Fig. 6C) is provided on the sliding sleeve, and a groove for accommodating the blocking member 111 to slide therein is correspondingly provided in the operating shaft 15, the groove extending in the axial direction of the operating shaft. In the process of inserting the unlocking rod into the hollow chamber 151, an extremity of the unlocking rod pushes the blocking member 111 to push the sliding sleeve, thereby pushing the first engaging member 12 to move away from the first end (the lower end in Fig. 2) of the second engaging member 10, so that the first engaging member 12 and the second engaging member 10 disengage from each other.

Once the first engaging member 12 and the second engaging member 10 have disengaged from each other, i.e. entered an unlocked state, rotation of the operating shaft 15 can no longer be transmitted to the limiting assembly 101, so closing of the grounding switch will not affect the limiting assembly 101. The limiting assembly 2101 does not move, so in the unlocked state, the main switch trolley can move freely between the test position and the working position. Correspondingly, rotation of the operating shaft 15 and closing of the grounding switch are not restricted by whether the main switch trolley is in the test position.

Thus, in the solution of the present invention, unlocking of the main switch trolley and the grounding switch can be achieved when required by disengaging the first engaging member 12 and the second engaging member 10 from each other by means of the unlocking mechanism, and the requirements of automatic testing for example can be met, thus increasing testing efficiency and saving labor.

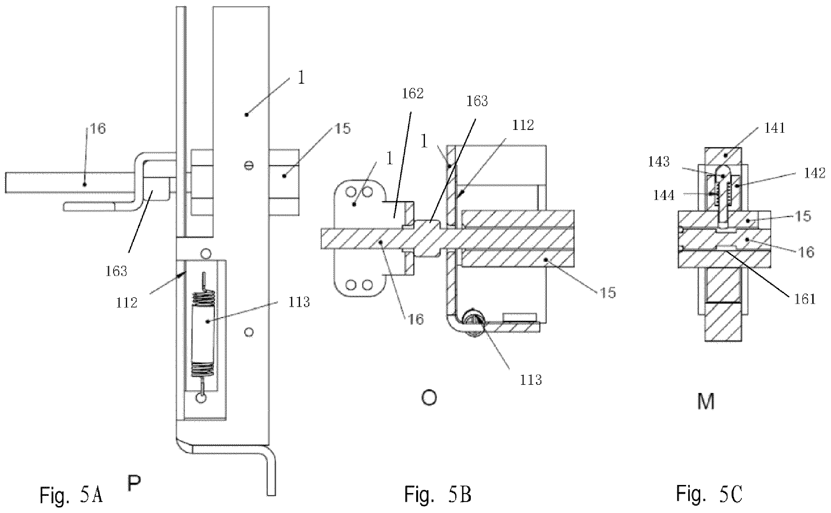

To further improve safety of operation in the unlocked state, this embodiment of the present invention further provides an unlocking rod locking mechanism 14. Reference is made in particular to Fig. 2, view M in Fig. 5C, view K-K in Fig. 6A, Fig. 10A and Fig. 10B. The unlocking rod locking mechanism 14 is arranged on the operating shaft 15, and comprises a second cam 141 at an outer side, the second cam 141 being fixed in relation to a housing of the switchgear (for conciseness, the means of fixing same is not shown in the figures). The unlocking rod locking mechanism 14 further comprises a rotary wheel 142 located at a radially inner side of the second cam 141. The rotary wheel 142 is fixed to the operating shaft 15, so as to rotate with the operating shaft 15. Preferably, the unlocking rod locking mechanism 14 may further comprise a limiting member 145, arranged in the rotary wheel 142 to restrict movement of the rotary wheel 142 relative to the operating shaft 15 in the axial direction. As shown in the figures mentioned above, the unlocking rod locking mechanism 14 further comprises a first elastic member 144 and a first pin 143 configured to pass through radial through-holes of the rotary wheel 142 and the operating shaft 15, the first pin 143 being biased by the first elastic member 144 toward the second cam 141. As shown in the partial enlarged schematic drawing M in Fig. 5C, a radial stepped hole for accommodating the first pin 143 and the first elastic member 144 is provided in the rotary wheel 142, and a radial hole for accommodating the first pin 143 is correspondingly provided in the operating shaft 15. A limiting groove 161, which is for example annular, is provided on the unlocking rod at a position corresponding to a radially inner end of the first pin 143. A radially outer end of the first pin 143 is in contact with a radially inner cam surface of the second cam 141. As shown in sectional view R-R in Fig. 10A, a main body part 1411 and a recessed part 1412 of larger internal diameter than the main body part are formed on the radially inner cam surface, and the main body part 1411 and recessed part 1412 are constructed in such a way that when the operating shaft 15 is in a position that causes the grounding switch to be open, the radially outer end of the first pin 143 abuts the recessed part 1412 and the radially inner end of the first pin is located outside the limiting groove 161, i.e. does not limit the unlocking rod, so the unlocking rod is able to smoothly pass the locking mechanism 14 and continue to be inserted all the way, so as to realize unlocking. However, when the operating shaft 15 is in a position that causes the grounding switch to leave the open state (e.g. the operating shaft 15 rotates to close the grounding switch), the radially outer end of the first pin 143 abuts the small-diameter main body part 1411 and the radially inner end of the first pin is pushed inward and thus enters the limiting groove 161 on the unlocking rod (as shown in view S in Fig. 10B), to limit the unlocking rod in a locked position.

The above-described structure of the unlocking rod locking mechanism 14 ensures that an unlocking key can only be inserted for unlocking when the grounding switch is in the open position; and when the grounding switch is closed after the unlocking key has been inserted, the unlocking key is limited and so cannot be withdrawn. Thus, the safety of the switchgear is further improved.

Further, the interlocking and unlocking device of the first embodiment may further comprise an operating member 1 (also called a tongue, which can be pressed down manually) arranged near an end of the operating shaft 15 and capable of being pressed down and returning. When the operating member 1 is in a pressed-down state, the end of the operating shaft 15 is exposed, so that the operating shaft can be operated manually, and an inlet of the hollow chamber in the operating shaft 15 is exposed so that the unlocking rod can be inserted.

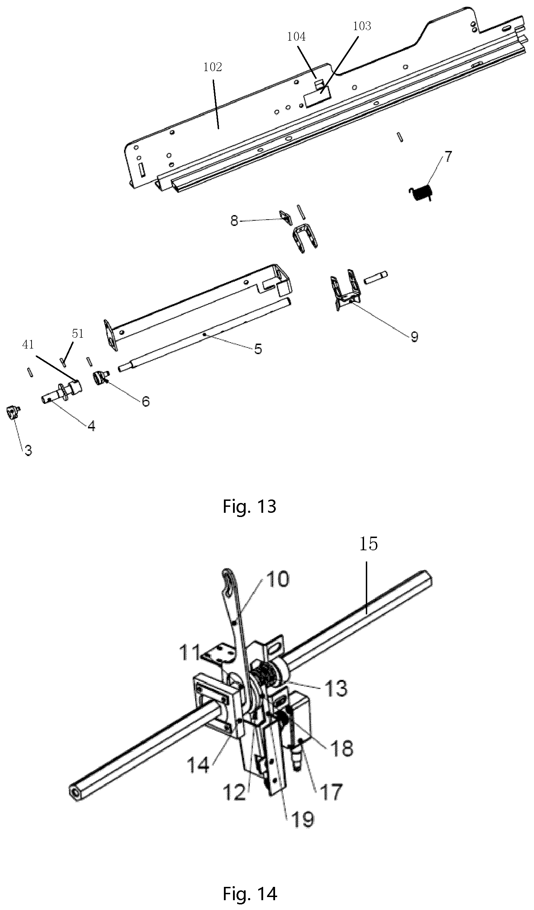

As shown in Figs. 2, 7, 8 and 11, the operating member 1 is coupled to the rotary rod 5 by means of a transmission component; when the operating member 1 is pressed down, the rotary rod 5 is driven to rotate, and when the operating member 1 is released, the fourth elastic member 7 drives the rotary rod 5 to rotate, so as to cause the operating member 1 to return. In the example shown in Figs. 2 - 16, the transmission component comprises a connecting plate 2, a second swinging member 3 and a coupling rod 4. As shown in Figs. 11 and 13, an end of the rotary rod 5 is accommodated in an internal hole of the coupling rod 4, and a second pin shaft 51 is provided on this end (see view A-A in Fig. 4A). A circumferential groove 41 adapted to have the second pin shaft 51 slide therein is provided on the coupling rod 4, the circumferential groove 41 and the second pin shaft 51 being configured such that: when the operating member 1 is pressed down, the coupling rod 4 drives the rotary rod 5 to rotate; when the operating member 1 returns under the action of the fourth elastic member 7, the rotary rod 5 drives the coupling rod 4 to rotate; when the operating shaft 15 rotates and drives the rotary rod 5 to rotate by means of the first engaging member 12 and the second engaging member 10, the second pin shaft 51 slides in the circumferential groove 41 and does not drive the coupling rod 4. For example, the second pin shaft 51 may be arranged at one end of the circumferential groove 41, so that in Fig. 11 for example, the rotary rod 5 is driven to rotate clockwise when the coupling rod 4 rotates clockwise; the coupling rod 4 is driven to rotate anticlockwise when the rotary rod 5 rotates anticlockwise; and when the rotary rod 5 rotates clockwise under the action of the second engaging member 10, the coupling rod 4 cannot be driven to rotate because the second pin shaft 51 slides in the circumferential groove 41.

Referring to Figs. 11, 12 and 13, when the operating member 1 is pressed down, the connecting plate 2 is driven to move downward, the connecting plate 2 drives the second swinging member 3 to rotate clockwise, the second swinging member 3 drives the coupling rod 4 to rotate clockwise, and the coupling rod 4 drives the rotary rod 5 to rotate clockwise. The rotary rod 5 drives the first swinging member 6 to rotate clockwise; due to the accommodating, i.e. arc-shaped groove 10a in the second engaging member 10, the second engaging member 10 is not driven to move. The rotary rod 5 drives the fourth elastic member 7 to rotate clockwise so that the elastic force thereof increases. If the main switch trolley is in the test position at this time, the rotary rod 5 will be able to drive the second protruding member 8 in the limiting assembly 101 to move into the cabinet through the second opening in the guide rail 102 (with the trolley in the test position, the second protruding member 8 can move into the cabinet), and at the same time drive the first protruding member 9 to move into the cabinet. This method can be used to test whether the main switch trolley is in the test position. It can also be seen from the process described above that when the main switch trolley is not in the test position, the second protruding member 8 is blocked, so the rotary rod 5 is unable to rotate in a direction that causes the second protruding member 8 to protrude from the guide rail, and the operating member 1 is blocked and thus cannot be pressed down, and thus cannot expose the inlet of the hollow chamber of the operating shaft 15, so the unlocking rod cannot be inserted. It is thus ensured that when the main switch trolley is not in the test position, the unlocking rod cannot be inserted for unlocking. Thus, in this embodiment of the present invention, the configuration of the operating member 1 that moves in linkage with the rotary rod 5 ensures that the unlocking rod cannot be inserted for unlocking when the main switch trolley is not in the test position. Moreover, with reference to the configuration of the locking mechanism 14 described above, it is ensured that the unlocking rod can be inserted into the operating shaft 15 to enter the unlocked state only when the main switch trolley is located in the test position and the grounding switch is in the open position.

Once the unlocking rod has been inserted, downward pressure on the operating member 1 is removed, the fourth elastic member 7 drives the rotary rod 5 to rotate anticlockwise, at the same time driving the second protruding member 8 and the first protruding member 9 to move out of the cabinet, and driving the coupling rod 4 to rotate anticlockwise; the coupling rod 4 drives the second swinging member 3 to rotate anticlockwise, the second swinging member 3 pulls the connecting plate 2, and the connecting plate 2 pulls the operating member 1 to return.

As shown in view P and view O in Figs. 5A and 5B, in a state in which the unlocking rod has been inserted and the operating member 1 has returned, a first blocking part 162 provided on the operating member abuts a second blocking part 163 provided on the unlocking rod, to block withdrawal of the unlocking rod from the hollow chamber. If the main switch trolley moves away from the test position at this time, the rotary rod 5 cannot cause the second protruding member 8 to rotate in such a direction as to protrude from the guide rail because the second protruding member 8 is blocked, and the operating member 1 cannot be pressed down; and due to the interaction of the first blocking part 162 and the second blocking part 163, the unlocking rod cannot be pulled out. Thus, it is ensured that once the unlocking rod has been inserted and performed unlocking, if the main switch trolley leaves the test position (i.e. is in the working position/intermediate position), the unlocking key will be unable to be pulled out, so as to maintain the unlocked state; this further ensures safety of operation in the unlocked state.

As shown in Fig. 16, the interlocking and unlocking device in this embodiment further comprises a cover plate 112 slidably arranged on the operating member 1 and adapted to cover the inlet of the hollow chamber of the operating shaft, and a third elastic member 113 connecting the cover plate 112 and the operating member 1, wherein the third elastic member 113 biases the cover plate 112 toward the inlet. The cover plate 112 is used to cover the inlet of the hollow chamber when the unlocking rod is not inserted, to prevent foreign matter from entering the operating shaft and improve appearance.

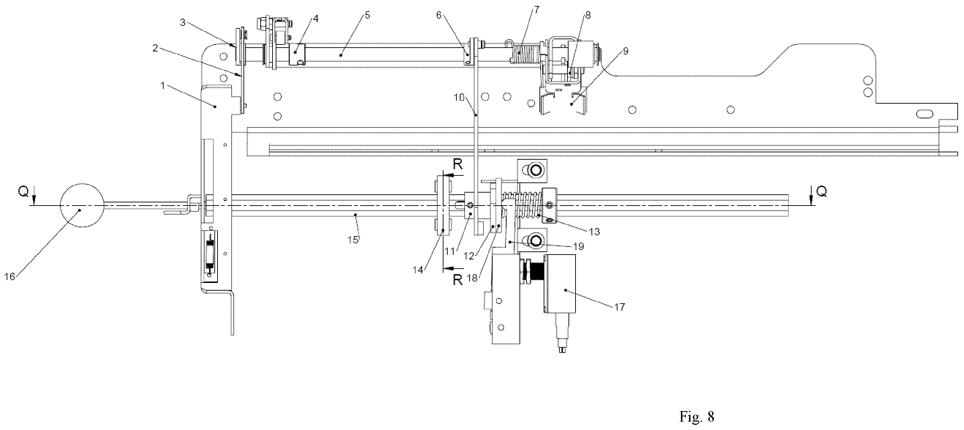

In the first embodiment, as shown in Figs. 2 and 8, the unlocking mechanism further comprises a second elastic member 13 for causing the sliding sleeve and the first engaging member 12 to return, so that the first engaging member 12 and the second engaging member 10 re-engage when the unlocking rod is pulled out, thus restoring the interlock function. The second elastic member 13 may abut a washer 18.

As shown in Figs. 2, 8, 11 and 14, the unlocking mechanism may further comprise an unlocked state sensing element 17, configured to be able to sense an engaged or disengaged state of the first engaging member 12 and the second engaging member 10. Preferably, the unlocking mechanism may further comprise a proportional amplification micro-motion member 19 located between the first engaging member 12 and the unlocked state sensing element 17, to transmit movement of the first engaging member 12 in amplified form to the unlocked state sensing element 17, so that the latter senses the unlocked state with greater sensitivity.

The specific operation of inserting the unlocking rod into the operating shaft 15 to release the interlocking between the main switch trolley and the grounding switch, and specific operations in the unlocked state, are described in specific terms below, for better understanding of the structure and manner of operation of the interlocking and unlocking device. Figs. 2 - 7 show schematic drawings of insertion of the unlocking rod for unlocking when the main switch trolley is in the test position and the grounding switch is open. Figs. 8 - 10B show schematic drawings of a state in which the main switch trolley is in the test position and the grounding switch is closed, in the unlocked state.

Referring to Figs. 2 - 7, in conjunction with the 3D schematic drawings in Figs. 11 - 16, when the operating member 1 is pressed down (at which time the inlet of the hollow chamber in the operating shaft 15, i.e. a socket for the unlocking rod, is exposed), the connecting plate 2 is driven to move downward, the connecting plate 2 drives the second swinging member 3 to rotate clockwise, the second swinging member 3 drives the coupling rod 4 to rotate clockwise, and the coupling rod 4 drives the rotary rod 5 to rotate clockwise. The rotary rod 5 drives the first swinging member 6 to rotate clockwise; due to the accommodating arc-shaped groove in the second engaging member 10, the second engaging member 10 does not move. The rotary rod 5 drives the fourth elastic member 7 to rotate clockwise (the elastic force of the fourth elastic member increases), at the same time driving the first protruding member 9 to move into the cabinet where the main switch trolley is located (since the trolley is in the test position, the first protruding member 9 is able to move into the cabinet, so as to press the trolley threaded rod and lock same, so that the trolley threaded rod cannot be cranked), and the second protruding member 8 moves into the cabinet where the main switch trolley is located. At the same time, the unlocking rod is inserted into the unlocking hole, i.e. the hollow chamber 151 in the operating shaft 15, and enters the unlocking rod locking mechanism 14; since the operating shaft 12 is in the open position, the radially outer end of the first pin 143 abuts the recessed part 1412 of the second cam 141 under the action of the first elastic member 144, and the radially inner end of the first pin does not extend into the limiting groove 161 on the unlocking rod, i.e. does not limit the unlocking rod. The unlocking rod smoothly passes the unlocking rod locking mechanism 14 (see Figs. 5C and 6A), the unlocking member 16 pushes the blocking member 111 on the transmission member 11 to move to the right along the operating shaft 15, the transmission member 11 pushes the first engaging member 12 to move to the right, and the first engaging member 12 separates from the second engaging member 10 (the first engaging member 12 and the second engaging member 10 do not interact, see Fig. 6B), thus realizing unlocking. In addition, the first engaging member 12 pushes the washer 18 to move to the right, and the washer 18 pushes the proportional amplification micro-motion member 19 to move to the right, triggering the unlocked state sensing element 17 to issue an unlocking signal. At the same time, the washer 18 compresses the second elastic member 13, and the elastic force of the second elastic member 13 increases. When downward pressure on the operating member 1 is removed, the fourth elastic member 7 returns, driving the rotary rod 5 to rotate anticlockwise, at the same time driving the first protruding member 9 and the second protruding member 8 to move out of the cabinet, and driving the coupling rod 4 to rotate anticlockwise; the coupling rod 4 drives the second swinging member 3 to rotate anticlockwise, the second swinging member 3 pulls the connecting plate 2, the connecting plate 2 pulls the operating member 1 to return, and the first blocking part 162 on the operating member 1 engages with the second blocking part 163 on the unlocking rod; with the unlocking member inserted in the hole, the cover plate 112 is blocked by the unlocking rod and thus cannot return together with the operating member 1; the cover plate 112 pulls the third elastic member 113, and the tension of the third elastic member 113 increases. Only when the unlocking rod has been pulled out, will the cover plate 112 move to a position where it covers the inlet of the hollow chamber of the operating shaft under the action of the third elastic member 113.

Referring to Figs. 8 - 10B, in conjunction with the 3D schematic drawings in Figs. 11 - 16, in the unlocked state, when the grounding switch (ground switch) is to be closed, the electric motor drives the operating shaft 15 to rotate 180 degrees clockwise; the grounding switch closes, the operating shaft 15 drives the first engaging member 12 to rotate 180 degrees, and since the first engaging member 12 and the second engaging member 10 are already disengaged, the two engaging members will not interact, so the second engaging member 10 does not move. The operating shaft 15 drives the rotary wheel 142 to rotate 180 degrees clockwise; the radially outer end of the first pin 143 has rotated to a position where it abuts the main body part 1411 of smaller internal diameter of the radially inner cam surface of the second cam 141, and the first pin 143 is pressed into the unlocking hole 15 of the operating shaft, and inserted into the limiting groove 161, thus locking the unlocking rod; if the grounding switch is not opened, the unlocking rod cannot be pulled out. Since the second engaging member 10 is not pulled down, the first protruding member 9 and the second protruding member 8 do not move into the cabinet where the main switch trolley is located, and the main switch trolley can move freely to the working position. That is to say, movement of the main switch trolley is independent of the state of the grounding switch, and the trolley can move to the working position freely when the grounding switch is in a closed state.

The present invention further provides a switchgear, comprising a grounding switch and a movable main switch trolley, and an interlocking and unlocking device for a main switch trolley and a grounding switch in each example described herein. The interlocking and unlocking device enables the switchgear to meet interlock requirements under normal circumstances, thus ensuring safety, and release the interlocking between the grounding switch and the main switch trolley as necessary in scenarios where this is required, so that operation is convenient. For example, automatic testing and automatic implementation of inspections are facilitated, testing efficiency is improved, and manpower is saved. Furthermore, the various structures in the interlocking and unlocking device described above fully ensure the safety of the switchgear during unlocking operations.

### Second embodiment

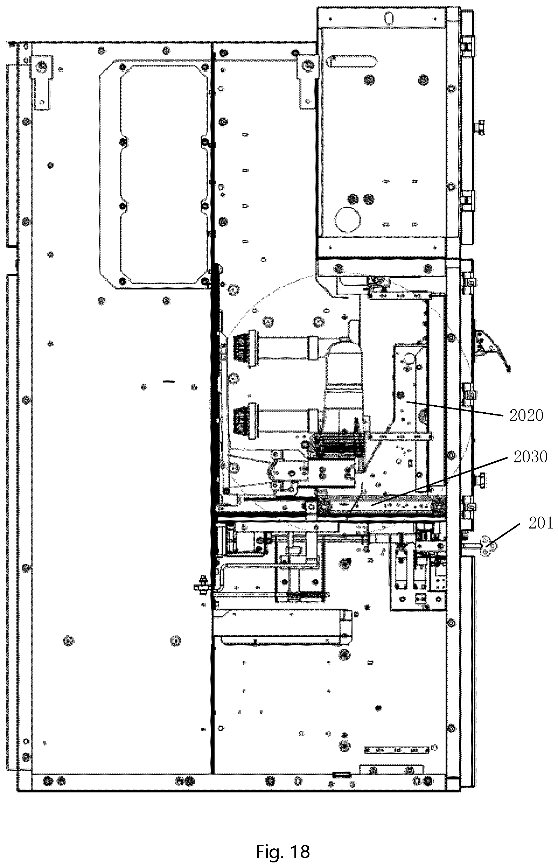

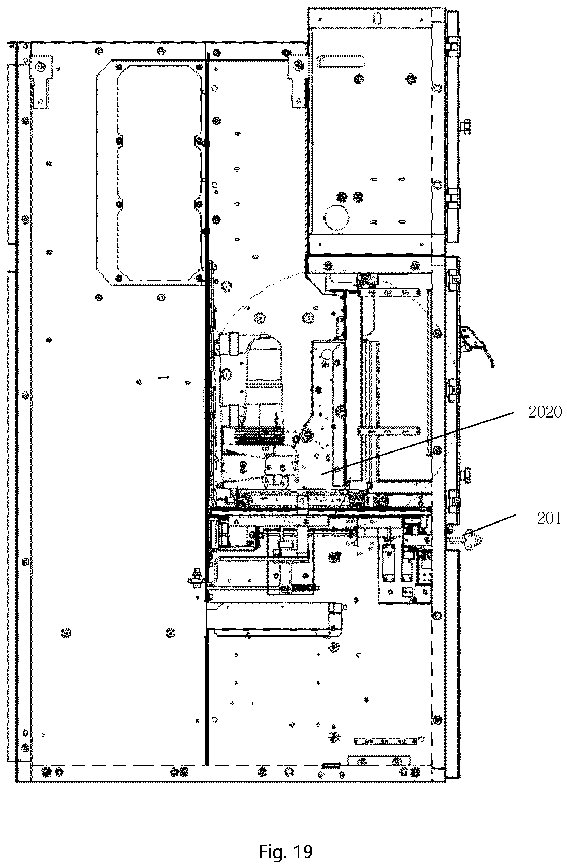

Figs. 17 - 35 show an interlocking and unlocking device for a main switch trolley and a grounding switch of a switchgear 200 according to a second embodiment of the present invention. Figs. 17 - 19 show an exemplary switchgear 200. A circuit breaker 2020 is provided on a main switch trolley 2030, so as to move therewith. Fig. 18 shows the main switch trolley 2030 in a test position; Fig. 19 shows the main switch trolley 2030 moved into a working position.

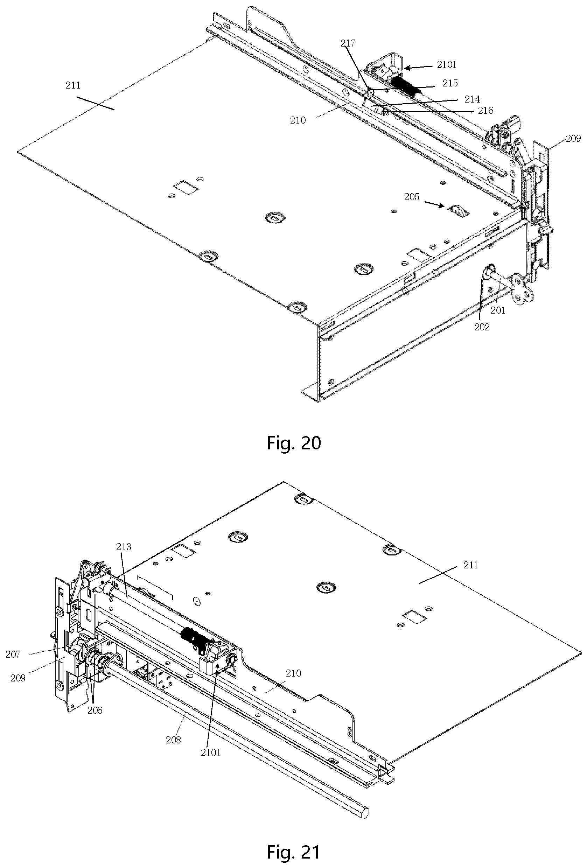

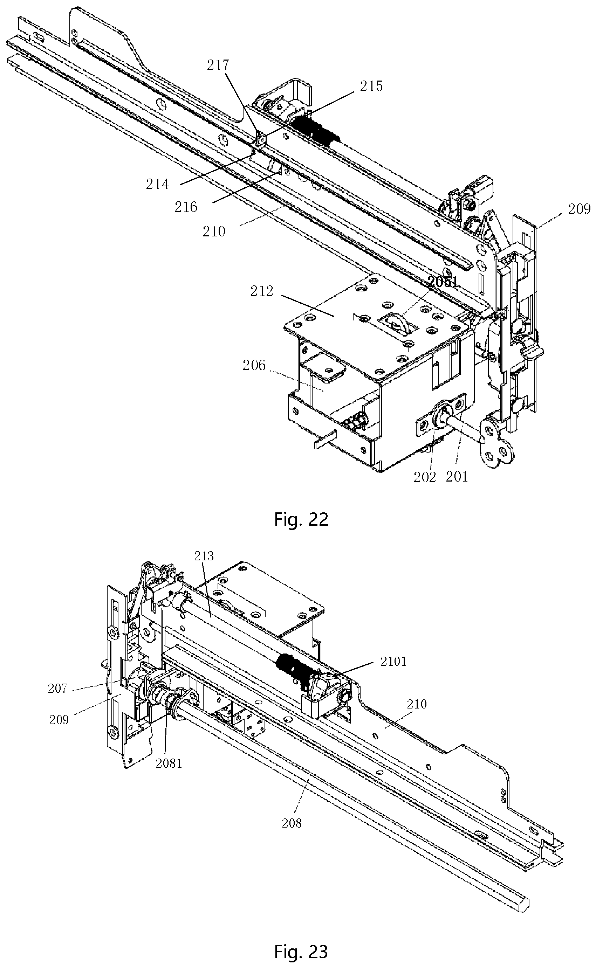

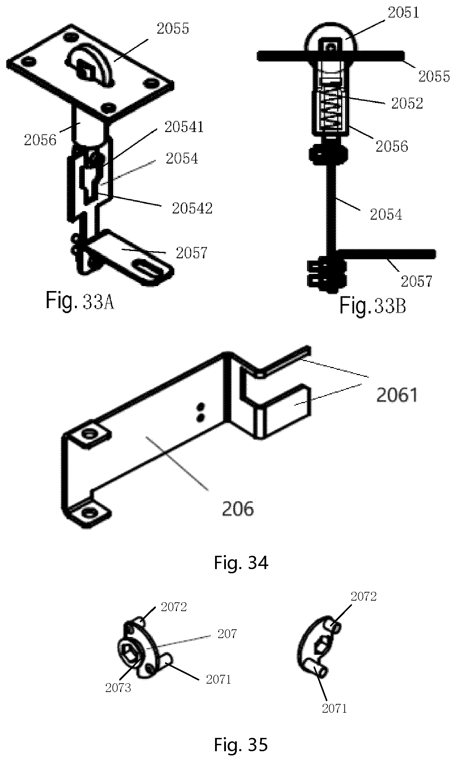

As shown in Figs. 21 and 23, an interlocking mechanism in the interlocking and unlocking device for a main switch trolley and a grounding switch in this embodiment comprises a first engaging member 207, which is arranged on an operating shaft 208 of the grounding switch so as to rotate therewith. The operating shaft 208 of the grounding switch is operably rotational, and can be driven electrically, so as to drive the grounding switch to realize closing and opening thereof. The operating shaft 208 can also be operated manually, so as to manually close or open the grounding switch if necessary, for example in an emergency. The first engaging member 207 is constructed as a cam. An exemplary structure of the first engaging member 207 in the form of a cam is shown in Fig. 35; it comprises a first engaging part 2071 adapted to act on a locking member 204 (described below) and a second engaging part 2072 adapted to act on a second engaging member 209 (constructed as a slider in this embodiment). The first engaging part 2071 and the second engaging part 2072 may be columnar members. The second engaging member 209 is adapted to engage with or disengage from the first engaging member 207. As shown in Figs. 21 and 23, the interlocking mechanism further comprises a limiting assembly 2101 arranged at a guide rail of the main switch trolley, the limiting assembly being able to limit the main switch trolley; the second engaging member 209, i.e. the slider moves in linkage with the limiting assembly 2101, so as to realize interlocking of the main switch trolley and the operating shaft 208 when the first engaging member 207 and the second engaging member 209 are in an engaged state.

As shown in Figs. 21 and 23, the interlocking mechanism comprises a rotary rod 213, and the slider 209 is coupled to the rotary rod 213 via a transmission component. The structure of the transmission component between the slider 209 and the limiting assembly 2101 may be the same as the structure of the transmission component in the first embodiment (see Figs. 20 - 23 in the second embodiment and Figs. 2, 8 and 11 in the first embodiment), so is not described again here.

The limiting assembly 2101 is arranged on the rotary rod 213, so as to be able to swing between an extended position, in which the main switch trolley is limited, and a retracted position, as the rotary rod 213 rotates. The structure of the limiting assembly in this embodiment may be the same as the structure of the limiting assembly in the first embodiment. Specifically, as shown in Figs. 20 - 23, the limiting assembly 2101 is arranged at the opposite side of the guide rail from the main switch trolley, and comprises a first protruding member 214 for locking the trolley in the test position. In the extended position, the first protruding member 214 protrudes through a first opening 216 in the guide rail to brake a driving member of the main switch trolley, thereby preventing movement of the main switch trolley so as to lock it in the test position. In the retracted position, the first protruding member 214 does not protrude beyond the guide rail. The limiting assembly 2101 further comprises a second protruding member 215 for trolley position inspection. When the main switch trolley is in the test position, the limiting assembly 2101 can reach the extended position, in which the second protruding member 215 passes through a second opening 217 in the guide rail and thus protrudes from the guide rail; in the retracted position, the second protruding member 215, blocked by the main switch trolley, does not protrude beyond the guide rail.

If an unlocking key 201 in this embodiment has not been inserted and not performed an unlocking operation, the interlocking mechanism operates normally, i.e. realizes interlocking between the grounding switch and the main switch trolley. When the grounding switch is in a closed state, the main switch trolley is unable to move from the test position to the working position. At a position in which the main switch trolley has left the test position, the grounding switch cannot close.

For better understanding of the structure, an operation when the main switch trolley is in the test position and the grounding switch is closed, in a normal interlocking state in which the unlocking key is not inserted, is described below. Referring to Figs. 22 and 23, an electric motor of the grounding switch drives the operating shaft 208 of the grounding switch to rotate 180 degrees anticlockwise, the grounding switch closes, the operating shaft 208 drives the first engaging member 207, i.e. the cam to rotate 180 degrees, the second engaging part 2072 on the first engaging member 207 pushes the second engaging member 209, i.e. the slider, to move downward, and the second engaging member 209 drives the rotary rod 213 to rotate anticlockwise by means of the transmission component. As it rotates, the rotary rod 213 drives the second protruding member 215 in the limiting assembly 2101 to move through the second opening 217 in the guide rail toward the main switch trolley (into a cabinet where the main switch trolley is located; with the trolley in the test position, the second protruding member 215 can move into the cabinet), and at the same time drives the first protruding member 214 to move into the cabinet (with the trolley in the test position, the first protruding member 214 can move into the cabinet), so as to press against a threaded rod of the trolley and lock it; the trolley threaded rod cannot be cranked, so the main switch trolley is braked, and thus prevented from leaving the test position and moving to the working position.

Correspondingly, it can also be seen from the above process that if the main switch trolley is not in the test position, the second protruding member 215 will be unable to protrude beyond the guide rail due to the blocking action of a chassis of the main switch trolley, so rotation of the rotary rod 213 is restricted, and the operating shaft 208 is thus unable to realize the abovementioned anticlockwise rotation to realize closing of the grounding switch. As can be seen, the interlocking mechanism in the interlocking and unlocking device realizes an interlocking function, thus meeting interlock requirements.

An unlocking mechanism in the interlocking and unlocking device is described in detail below; the unlocking mechanism is able to disengage the first engaging member 207 and the second engaging member 209 from each other, to realize unlocking of the grounding switch operating shaft 208 and the main switch trolley. Demonstratively, in this unlocked state, movement of the main switch trolley is independent of opening or closing of the grounding switch. This enables the grounding switch to be opened or closed when the main switch trolley is in the working position, and the main switch trolley to be cranked in or out between the test position and the working position when the grounding switch is in a closed state, as required.

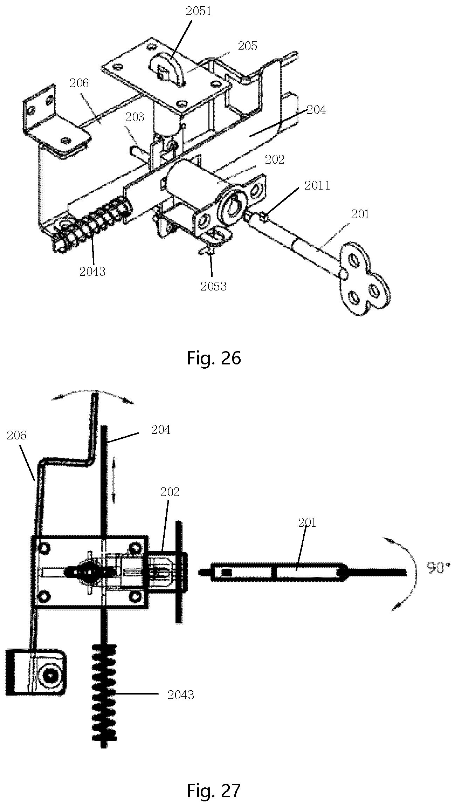

As shown in Figs. 22 and 23, the unlocking mechanism comprises a housing 212, and substantially all components of the unlocking mechanism are arranged in the housing 212. As shown in Figs. 20 and 21, the unlocking mechanism is arranged below a partition plate 211 of a main switch trolley compartment and located at the same side of the guide rail 210 as the main switch trolley, wherein the unlocking mechanism comprises a control assembly 205 capable of controlling operation of the unlocking key according to the position of the main switch trolley, the control assembly 205 being able to partially project to a region above the partition plate 211, so as to be adapted to be pressed down by the main switch trolley located in the test position. See Figs. 26, 33A and 33B for the specific structure of the control assembly 205, which comprises a rolling wheel 2051 capable of at least partially projecting to the region above the partition plate 211, and a sixth elastic member 2052 that biases the rolling wheel 2051 toward the main switch trolley. The control assembly 205 may comprise a fixing member composed of a fixing plate 2055 and an accommodating part 2056, wherein the fixing plate 2055 is used for fixing the entire control assembly 205 below the housing 212, and the sixth elastic member 2052 is accommodated in the accommodating part 2056. Under the action of the sixth elastic member 2052, the rolling wheel 2051 can move up and down, and a limiting plate 2054 (described below) and an actuating plate 2057 which are connected to the rolling wheel can move up and down. The control assembly 205 further comprises a blocking member 2053 (see Fig. 26), described further below, which is located in a hole of the actuating plate 2057 so as to be driven by the actuating plate 2057.

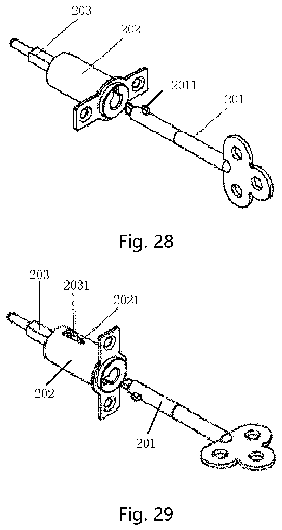

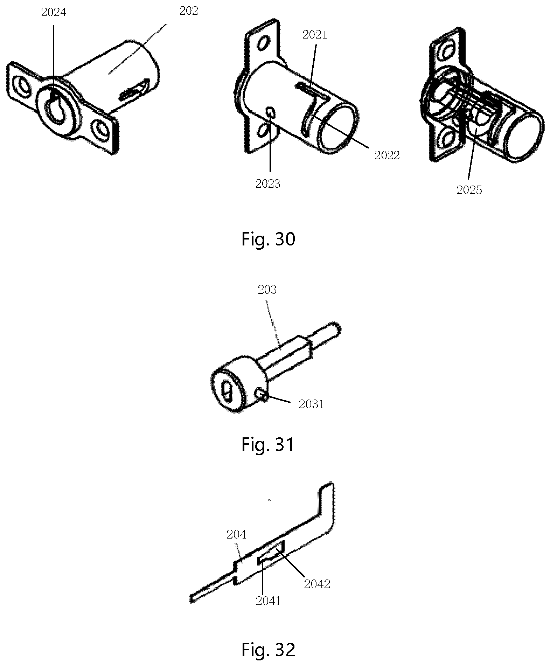

In this embodiment, as shown in Figs. 28 - 31, the unlocking member 201 is constructed as a rotatable unlocking key. The unlocking mechanism further comprises a guide sleeve 202 with a channel for the unlocking key formed therein, and an actuating core 203 arranged on the guide sleeve 202, wherein the unlocking key is adapted to pass through the channel and engage with the actuating core 203, and the actuating core 203 is able, under the operating action of the unlocking key, to push a transmission member 206 by means of an end of the actuating core, thus driving the first engaging member 207. A wall of the guide sleeve 202 is provided with an axial guide groove 2021, and a circumferential guide groove 2022 extending from an end of the axial guide groove 2021 that is remote from an inlet of the channel; and a pin 2031 that slides in the axial guide groove 2021 and the circumferential guide groove 2022 is provided on the actuating core 203. A protrusion 2011 is provided on the unlocking key, and the following are formed in the channel of the guide sleeve 202: a keyway 2024 for the protrusion 2011 to slide in, and a step face 2025 for abutting the protrusion 2011 (see the drawing furthest to the right in Fig. 30). Once the unlocking key has been inserted to a position where it is engaged with the actuating core 203 and has pushed the actuating core 203 along the axial guide groove 2021 and to rotate along the circumferential guide groove 2022, the protrusion 2011 abuts the step face 2025, and the unlocking key is limited in an unlocked position.

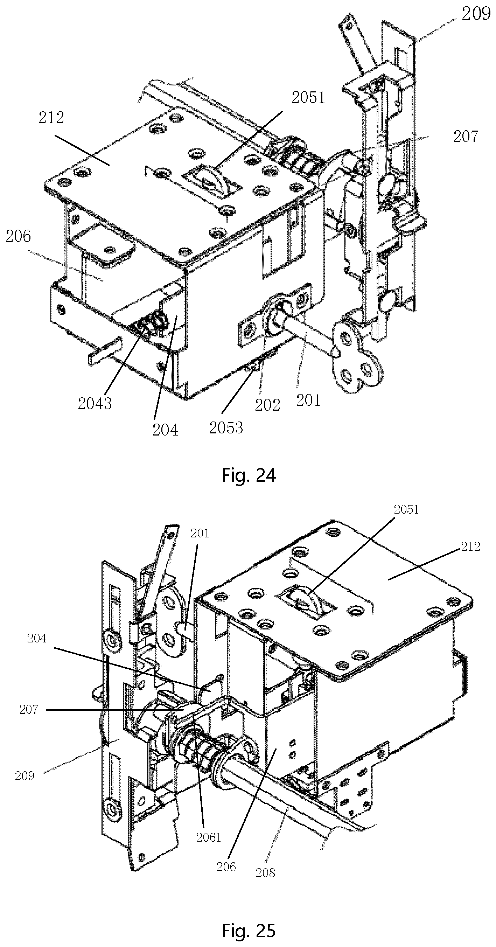

As shown in the middle drawing in Fig. 30, a radial through-hole 2023 is provided in the guide sleeve 202, for the abovementioned blocking member 2053 to slide in. As shown in Figs. 24 and 26, when the main switch trolley is in the test position, the rolling wheel 2051 is pressed down, and the blocking member 2053 is driven downward by means of the actuating plate 2057 to leave the channel in the guide sleeve 202, thereby allowing the unlocking key to enter the channel. Thus, the configuration of the rolling wheel 2051, the sixth elastic member 2052 and the blocking member 2053 ensures that the unlocking key can only be inserted when the main switch trolley is in the test position.

The unlocking key is inserted, guided by the protrusion 2011 and the keyway 2024, until a front end of the unlocking key enters a hole in an end face of the actuating core 203 as shown in Fig. 31 such that the unlocking key is connected to the actuating core 203, then the unlocking key continues to be pushed forward, such that the pin 2031 on the actuating core 203 moves in the axial guide groove 2021 of the guide sleeve 202 to the end of the axial guide groove 2021 that is remote from the inlet of the channel, then the unlocking key is turned, and the pin 2031 enters the circumferential guide groove 2022 and slides therein, thereby fixing the unlocking key in the direction of insertion, to reach a stable unlocked state.

In the process of insertion described above, the end of the pushed actuating core 203 abuts the transmission member 206. The transmission member 206 is pivotably arranged in the housing 212. As shown in Figs. 25 and 34, the transmission member 206 comprises a leg part 2061 adapted to engage with the cam, i.e. the first engaging member 207. As shown in Fig. 35, an annular groove 2073 adapted to engage with the leg part 2061 of the transmission member 206 may be formed on a main body of the first engaging member 207. When the actuating core 203 is driven by the unlocking key and pushes the transmission member 206, the transmission member 206 pivots (see Fig. 27), and the leg part 2061 thereof drives the first engaging member 207 (i.e. the cam) to move away from the second engaging member 209 (i.e. the slider), such that the cam and the slider disengage, disconnecting the movement linkage between operation of the operating shaft 208 and the rotary rod 213 (and the limiting assembly 2101 thereon), thereby realizing unlocking of the main switch trolley and the grounding switch.

Once the unlocking key has turned through 90 degrees and entered the stable unlocked state, the first engaging member 207 and the second engaging member 209 are held in a disengaged state; rotation of the operating shaft 208 can no longer be transmitted to the limiting assembly 2101, so closing of the grounding switch will not affect the limiting assembly 2101. The limiting assembly 2101 does not move, so in the unlocked state, the main switch trolley can move freely between the test position and the working position. Correspondingly, rotation of the operating shaft 208 and closing of the grounding switch are not restricted by whether the main switch trolley is in the test position.

Thus, in the solution of the present invention, unlocking of the main switch trolley and the grounding switch can be achieved when required by disengaging the first engaging member 207 and the second engaging member 209 from each other by means of the unlocking mechanism, and the requirements of automatic testing for example can be met, thus increasing testing efficiency and saving labor.

As shown in Fig. 23, the interlocking and unlocking device further comprises a seventh elastic member 2081, arranged on the operating shaft 208 to push the cam to return. When the unlocking key has been pulled out, the seventh elastic member 2081 pushes the first engaging member 207 toward the second engaging member 209, so that the two engaging members re-engage, returning to a normal interlocked state of the main switch trolley and the grounding switch.

Preferably, a first slot 20541, and a second slot 20542 of smaller width than the first slot 20541, are formed on the limiting plate 2054. See Fig. 26 for the relative positions of the limiting plate 2054 and the actuating core 203. The actuating core 203 can pass through the limiting plate 2054 at the position of the first slot 20541 or the second slot 20542. The width of the first slot 20541 is designed to be able to allow the actuating core 203 to pass through and rotate. The width of the second slot 20542 is designed to be able to allow the actuating core 203 to pass through, but not to rotate. As shown in Fig. 31, the actuating core 203 comprises an engaging part with a prism-shaped or irregularly shaped cross section; the engaging part with this structure is adapted to pass through the first slot 20541 or the second slot 20542 and the actuating core is prevented from rotating. When the main switch trolley is in the test position, the rolling wheel 2051 is pressed down, and the actuating core 203 passes through the limiting plate 2054 at the position of the first slot 20541, allowing the actuating core 203 and the unlocking key to rotate; when the main switch trolley is not in the test position, the rolling wheel 2051 is sprung up by the sixth elastic member 2052 and drives the limiting plate 2054 upward, and the actuating core 203 passes through the limiting plate 2054 at the position of the second slot 20542, preventing rotation of the actuating core 203 and the unlocking key. If the trolley leaves the test position after insertion of the unlocking key, the rolling wheel 2051 is not pressed down, and the control assembly 205 springs up under the action of the sixth elastic member 2052. The actuating core 203 enters the smaller-width second slot 20542 and is prevented from rotating, so the unlocking key cannot rotate; thus, the pin 2031 cannot enter the circumferential guide groove 2022, and the unlocking key cannot be limited in a stable unlocked position. When the hand releases the unlocking key, due to the fact that the seventh elastic member 2081 pushes the first engaging member 207, the first engaging member 207 drives the transmission member 206 via the leg part 2061 to push the unlocking key in the direction opposite to the direction of insertion of the unlocking key, so the unlocking key is sprung out, and unlocking cannot be realized. Thus, in this solution of the present invention, the above-described structure of the limiting plate 2054 ensures that if the trolley leaves the test position when the unlocking key has been inserted but not yet turned to reach the stable unlocked state, the unlocking key will not be able to turn for unlocking, and instead will be sprung out.

Correspondingly, if the main switch trolley leaves the test position after the unlocking key has been inserted and turned to reach the stable unlocked state, as stated above, the rolling wheel will be sprung up by the sixth elastic member 2052, and the actuating core 203 will pass through the limiting plate 2054 at the position of the second slot 20542, preventing rotation of the actuating core 203 and the unlocking key. Thus, the unlocking key cannot turn back, and so cannot be pulled out. This also ensures that if the main switch trolley leaves the test position (i.e. is in the working position/intermediate position) after the unlocking key has been inserted and performed unlocking, the unlocking key cannot be pulled out. This ensures safe operation in the unlocked state.

Preferably, as shown in Figs. 24 - 26 and 32, the unlocking mechanism may further comprise the locking member 204, wherein the first engaging member 207, i.e. the cam comprises the first engaging part 2071 (Fig. 35) adapted to act on the locking member 204, and the unlocking mechanism further comprises a fifth elastic member 2043 for causing the locking member 204 to return; the locking member 204 reciprocates under the action of the cam and the fifth elastic member 2043. As shown in Fig. 32, a first opening part 2041, and a second opening part 2042 of greater width than the first opening part 2041, are formed in the locking member 204; the first opening part 2041 is constructed to allow the actuating core 203 to pass therethrough but prevent rotation thereof, and the second opening part 2042 is constructed to allow the actuating core 203 to pass therethrough and allow the actuating core 203 and the unlocking key to rotate. If the operating shaft 208 rotates to close the grounding switch when the unlocking key has already been inserted but not yet turned to reach the stable unlocked state, the cam is driven by the operating shaft 208, and the first engaging part 2071 on the cam pushes the locking member 204 to move to a position where the actuating core 203 passes through the first opening part 2041; in this position, the first opening part 2041 prevents rotation of the actuating core 203 and the unlocking key. Thus, the unlocking key cannot rotate, so the pin 2031 cannot enter the circumferential guide groove 2022, and the unlocking key cannot be limited in the stable unlocked position. When the hand releases the unlocking key, due to the fact that the seventh elastic member 2081 pushes the first engaging member 207, the first engaging member 207 drives the transmission member 206 via the leg part 2061 to push the unlocking key in the direction opposite to the direction of insertion of the unlocking key, so the unlocking key is sprung out, and unlocking cannot be realized. Thus, the locking member 204 ensures that if the operating shaft 208 rotates to close the grounding switch when the unlocking key has already been inserted but not yet turned to reach the stable unlocked state, the unlocking key cannot turn to the stable unlocked state, and instead is sprung out. It is thus ensured that the unlocking key can only be inserted and enter the stable unlocked state if the main switch trolley is in the test position and the grounding switch is open.

Correspondingly, if the grounding switch is closed after the unlocking key has been inserted and turned to reach the stable unlocked state, the actuating core 203 will pass through the position of the first opening part 2041; at this position, the first opening part 2041 prevents rotation of the actuating core 203 and the unlocking key, so the unlocking key cannot turn back and be pulled out. This ensures that the unlocking key cannot be pulled out if the grounding switch is closed after the unlocking key has been inserted and performed unlocking, so safety in the unlocked state is improved.

As can be seen from the operations described above, due to the structural design of the limiting plate 2054 and the locking member 204, the unlocking key can only be pulled out if the main switch trolley is in the test position and the grounding switch is in the open position. **In** other words, the actuating core 203 can only enter the position of the larger-width first slot 20541 in the limiting plate 2054 when the main switch trolley is in the test position, and the actuating core 203 is at the position of the larger-width second opening part 2042 only when the grounding switch is in the open position; the actuating core 203 can only rotate when both of these conditions are satisfied. It thus turns through 90 degrees until the pin 2031 thereon is able to enter the axial guide groove 2021, so as to be able to withdraw along the axial guide groove 2021. The unlocking key turns until the protrusion 2011 thereof is aligned with the keyway 2024 in the guide sleeve 202, so that the unlocking key can be pulled out.

An exemplary structure of the first engaging member 207 in the form of a cam is shown in Fig. 35; it comprises the first engaging part 2071 and the second engaging part 2072, which are constructed in the form of columnar parts protruding from a main body of the cam. The second engaging part 2072 is adapted to press against the slider; the first engaging part 2071 is adapted to abut the locking member 204. The columnar part serving as the first engaging part 2071 has a greater length than the columnar part serving as the second engaging part 2072. Thus, in a state in which the cam has already been pushed along the direction of the operating shaft to a position where the second engaging part 2072 is disengaged from the slider to achieve unlocking, the first engaging part 2071 is still able to engage with the locking member 204, to prevent withdrawal of the unlocking key when the grounding switch is in a closed state, as described above.

This embodiment also provides a switchgear, comprising a grounding switch and a movable main switch trolley, and an interlocking and unlocking device for a main switch trolley and a grounding switch in each example described herein. The interlocking and unlocking device enables the switchgear to meet interlock requirements under normal circumstances, thus ensuring safety, and release the interlocking between the grounding switch and the main switch trolley as necessary in scenarios where this is required, so that operation is convenient. For example, automatic testing and automatic implementation of inspections are facilitated, testing efficiency is improved, and manpower is saved. Furthermore, the various structures in the interlocking and unlocking device described above fully ensure the safety of the switchgear during unlocking operations.

Various modifications and changes can be made to the embodiments disclosed above by those skilled in the art without departing from the scope or spirit of the present invention. Based on the implementation of the present invention as disclosed herein, other embodiments of the present invention will be obvious to those skilled in the art. This description and the examples disclosed therein should be regarded as merely exemplary, the true scope of the present invention being specified by the attached claims and their equivalents.
The present invention and some aspects and details are now summarized in the following numbered embodiments.
Embodiment 1: An interlocking and unlocking device for a main switch trolley and a grounding switch of a switchgear (100, 200), wherein the interlocking and unlocking device comprises:
   an interlocking mechanism for locking the main switch trolley and the grounding switch, the interlocking mechanism comprising:
      a first engaging member (12, 207) arranged on an operating shaft (15, 208) of the grounding switch so as to rotate therewith, wherein the operating shaft (15, 208) of the grounding switch is operably rotatable to control the grounding switch to open or close;
      a second engaging member (10, 209) adapted to engage with or disengage from the first engaging member (12, 207); and
      a limiting assembly (101, 2101), arranged at a guide rail of the main switch trolley and capable of limiting the main switch trolley,
      wherein the second engaging member (10, 209) moves in linkage with the limiting assembly (101, 2101), to realize interlocking of the main switch trolley and the grounding switch when the first engaging member (12, 207) and the second engaging member (10, 209) are in an engaged state;
         and
   an unlocking mechanism, for disengaging the first engaging member (12, 207) and the second engaging member (10, 209) from each other to realize unlocking of the main switch trolley and the grounding switch.
Embodiment 2: The interlocking and unlocking device as described in embodiment 1, wherein the unlocking mechanism comprises an unlocking member (16, 201) and a transmission member (11, 206), wherein the transmission member (11, 206) can be coupled to the unlocking member (16, 201), so as to move under the driving action of the unlocking member (16, 201), and drive the first engaging member (12, 207) away from the second engaging member (10, 209).
Embodiment 3: The interlocking and unlocking device as described in any preceding embodiment, wherein
   the transmission member (11) is constructed as a sliding sleeve slidably fitted round the operating shaft (15), wherein the first engaging member (12) is constructed as a first cam and coupled to the sliding sleeve so as to slide therewith; the unlocking member (16) is constructed as an unlocking rod, wherein a hollow chamber (151) is provided in the operating shaft (15) in an axial direction thereof, the unlocking rod being adapted to be pushed into the hollow chamber (151) or to withdraw therefrom; and the unlocking rod is able to push the sliding sleeve in the process of being pushed into the hollow chamber (151).
Embodiment 4: The interlocking and unlocking device as described in any preceding embodiment , wherein a blocking member (111) is provided on the sliding sleeve, and a groove for accommodating the blocking member (111) to slide therein is correspondingly provided in the operating shaft (15), the groove extending in the axial direction of the operating shaft, wherein an extremity of the unlocking rod is constructed to be adapted to push the blocking member (111), so as to push the sliding sleeve.
Embodiment 5: The interlocking and unlocking device as described in any preceding embodiment, wherein the unlocking mechanism further comprises an unlocking rod locking mechanism (14), the unlocking rod locking mechanism (14) comprising: a second cam (141), fixed in relation to a housing of the switchgear; a rotary wheel (142), located at a radially inner side of the second cam (141) and fixed to the operating shaft (15); and a first elastic member (144) and a first pin (143) arranged in radial through-holes of the rotary wheel (142) and the operating shaft (15), the first pin (143) being biased toward the second cam (141) by the first elastic member, and the first pin (143) having a radially outer end in contact with a radially inner cam surface of the second cam (141), and a radially inner end adapted to limit the unlocking rod in a locked position.
Embodiment 6: The interlocking and unlocking device as described in any preceding embodiment, wherein a main body part (1411) and a recessed part (1412) of larger internal diameter than the main body part are provided on the radially inner cam surface, the recessed part being positioned so that: when the operating shaft (15) is in a position that causes the grounding switch to be open, the radially outer end of the first pin (143) abuts the recessed part (1412) and the radially inner end of the first pin does not limit the unlocking rod, and when the operating shaft (15) is in a position that causes the grounding switch to leave the open state, the radially outer end of the first pin (143) abuts the main body part (1411) and the radially inner end of the first pin limits the unlocking rod in the locked position.
Embodiment 7: The interlocking and unlocking device as described in any preceding embodiment, wherein a limiting groove (161) is formed in the unlocking rod, and the radially inner end of the first pin (143) extends into the limiting groove (161) in the locked position.
Embodiment 8: The interlocking and unlocking device as described in any preceding embodiment, wherein the unlocking rod locking mechanism (14) further comprises a limiting member (145), arranged in the rotary wheel (142) so as to limit same in an axial direction of the rotary wheel (142).
Embodiment 9: The interlocking and unlocking device as described in any preceding embodiment, wherein the unlocking mechanism further comprises a second elastic member (13) for causing the sliding sleeve and the first engaging member (12) to return.
Embodiment 10: The interlocking and unlocking device as described in any preceding embodiment, wherein the unlocking mechanism further comprises an unlocked state sensing element (17), configured to be able to sense an engaged or disengaged state of the first engaging member (12) and the second engaging member (10).
Embodiment 11: The interlocking and unlocking device as described in any preceding embodiment, wherein the unlocking mechanism further comprises a proportional amplification micro-motion member (19) located between the first engaging member (12) and the unlocked state sensing element (17), to transmit movement of the first engaging member (12) in amplified form to the unlocked state sensing element (17).
Embodiment 12: The interlocking and unlocking device as described in any preceding embodiment, wherein the interlocking mechanism further comprises a rotary rod (5) and a fourth elastic member (7) for causing the rotary rod (5) to return, wherein the limiting assembly (101) is arranged on the rotary rod (5), so as to be able to swing between an extended position, in which the main switch trolley is limited, and a retracted position, as the rotary rod (5) rotates, wherein a first end of the second engaging member (10) is adapted to engage with or disengage from the first engaging member (12), and a second end opposite the first end of the second engaging member (10) is coupled to the rotary rod (5).
Embodiment 13: The interlocking and unlocking device as described in any preceding embodiment, wherein the limiting assembly (101) is arranged at the opposite side of the guide rail from the main switch trolley, and comprises a first protruding member (9); in the extended position, the first protruding member (9) protrudes through a first opening (103) in the guide rail (102) to brake a driving member of the main switch trolley, thereby preventing movement of the main switch trolley so as to lock same in a test position; in the retracted position, the first protruding member (9) does not protrude beyond the guide rail (102).
Embodiment 14: The interlocking and unlocking device as described in any preceding embodiment, wherein the limiting assembly (101) further comprises a second protruding member (8); when the main switch trolley is in the test position, the limiting assembly (101) is able to move into the extended position, in which the second protruding member (8) passes through a second opening (104) in the guide rail (102) and protrudes from the guide rail; in the retracted position, the second protruding member (8), blocked by the main switch trolley, does not protrude beyond the guide rail (102).
Embodiment 15: The interlocking and unlocking device as described in any preceding embodiment, wherein it further comprises an operating member (1) arranged near an end of the operating shaft (15) and able to be pressed down and return, the operating member (1) being coupled to the rotary rod (5) by means of a transmission component; when the operating member (1) is pressed down, the rotary rod (5) is driven to rotate, and when the operating member (1) is released, the fourth elastic member (7) drives the rotary rod (5) to rotate so as to cause the operating member (1) to return; when the operating member (1) is in a pressed-down state, the hollow chamber of the operating shaft (15) is exposed to enable insertion of the unlocking rod.
Embodiment 16: The interlocking and unlocking device as described in any preceding embodiment, wherein a first blocking part (162) is provided on the operating member, and a second blocking part (163) is provided on the unlocking rod; in a state in which the unlocking rod has been inserted and the operating member has returned, the first blocking part (162) abuts the second blocking part (163), so as to block withdrawal of the unlocking rod from the hollow chamber.
Embodiment 17: The interlocking and unlocking device as described in any preceding embodiment, wherein it further comprises a cover plate (112) slidably arranged on the operating member (1) and adapted to cover an inlet of the hollow chamber, and a third elastic member (113) connecting the cover plate (112) and the operating member (1), wherein the third elastic member (113) biases the cover plate (112) toward the inlet.
Embodiment 18: The interlocking and unlocking device as described in any preceding embodiment, wherein the transmission component comprises a coupling rod (4), wherein an end of one of the coupling rod (4) and the rotary rod (5) is accommodated in an internal hole of the other, and a second pin shaft (51) is provided on this end; a circumferential groove (41) adapted to have the second pin shaft (51) slide therein is provided in said other, the circumferential groove (41) and the second pin shaft (51) being configured such that: when the operating member (1) is pressed down, the coupling rod (4) drives the rotary rod (5) to rotate; when the operating member (1) returns under the action of the fourth elastic member (7), the rotary rod (5) drives the coupling rod (4) to rotate; when the second engaging member (10) drives the rotary rod (5) to rotate, the second pin shaft (51) slides in the circumferential groove (41) and does not drive the coupling rod (4).
Embodiment 19: The interlocking and unlocking device as described in any preceding embodiment, wherein the second end of the second engaging member (10) is coupled to the rotary rod (5) by means of a first swinging member (6), wherein an arc-shaped groove (10a) is formed on the second end, and a first pin shaft (61) adapted to slide in the arc-shaped groove (10a) is provided on the first swinging member (6), the arc-shaped groove (10a) and the first pin shaft (61) being configured such that: when the second engaging member (10) is engaged with the first engaging member (12, 207) and moves under the driving action of the operating shaft (15, 208), the second engaging member (10) drives the first swinging member (6) to drive the rotary rod (5) to rotate; when the rotary rod (5) is driven by the operating member (1) or by the fourth elastic member (7) to rotate, the first pin shaft (61) of the first swinging member (6) driven by the rotary rod (5) slides in the arc-shaped groove (10a) and does not drive the second engaging member (10).
Embodiment 20: The interlocking and unlocking device as described in any preceding embodiment, wherein the first engaging member (207) is constructed as a cam, which is slidably fitted round the operating shaft (208) and rotates with the operating shaft (208), and the second engaging member (209) is constructed as a slider capable of sliding under the action of the cam, wherein the slider moves in linkage with the limiting assembly (2101).
Embodiment 21: The interlocking and unlocking device as described in any preceding embodiment, wherein the unlocking member (201) is constructed as a rotatable unlocking key, and the unlocking mechanism further comprises a guide sleeve (202) with a channel formed therein for the unlocking key, and an actuating core (203) arranged on the guide sleeve, wherein the unlocking key is adapted to pass through the channel and engage with the actuating core (203), and the actuating core (203) is able, under the operating action of the unlocking key, to push the transmission member (206) to drive the first engaging member (207).
Embodiment 22: The interlocking and unlocking device as described in any preceding embodiment, wherein the unlocking mechanism is arranged below a partition plate (211) of a compartment where the main switch trolley is located, and located at the same side of the guide rail (210) as the main switch trolley, wherein the unlocking mechanism comprises a control assembly (205) capable of controlling operation of the unlocking key according to a position of the main switch trolley, the control assembly (205) comprising a rolling wheel (2051) capable of at least partially projecting to the region above the partition plate, a sixth elastic member (2052) which biases the rolling wheel (2051) toward the main switch trolley, and a blocking member (2053) adapted to enter or leave the channel, wherein, when the main switch trolley is in the test position, the rolling wheel is pressed down, driving the blocking member (2053) to leave the channel, and thereby allowing the unlocking key to enter the channel.
Embodiment 23: The interlocking and unlocking device as described in any preceding embodiment, wherein the control assembly (205) further comprises a limiting plate (2054) coupled to the rolling wheel (2051); a first slot (20541) and a second slot (20542) of smaller width than the first slot are formed on the limiting plate (2054), wherein, when the main switch trolley is in the test position, the rolling wheel is pressed down, and the actuating core (203) passes through the first slot (20541), allowing the actuating core (203) and the unlocking key to rotate; when the main switch trolley is not in the test position, the rolling wheel is sprung up by the sixth elastic member (2052), and the actuating core (203) passes through the second slot (20542), preventing rotation of the actuating core (203) and the unlocking key.
Embodiment 24: The interlocking and unlocking device as described in any preceding embodiment, wherein a wall of the guide sleeve (202) is provided with an axial guide groove (2021), and a circumferential guide groove (2022) extending from an end of the axial guide groove that is remote from an inlet of the channel; and a pin (2031) that slides in the axial guide groove and the circumferential guide groove is provided on the actuating core (203).
Embodiment 25: The interlocking and unlocking device as described in any preceding embodiment, wherein a protrusion (2011) is provided on the unlocking key, and the following are formed in the channel of the guide sleeve (202): a keyway (2024) for the protrusion (2011) to slide in, and a step face (2025) for abutting the protrusion (2011); once the unlocking key has been inserted to a position where it is engaged with the actuating core (203) and has pushed the actuating core (203) along the axial guide groove (2021) and to rotate along the circumferential guide groove (2022), the protrusion (2011) abuts the step face (2025), and the unlocking key is limited in an unlocked position.
Embodiment 26: The interlocking and unlocking device as described in any preceding embodiment, wherein the actuating core (203) comprises an engaging part with a prism-shaped or irregularly shaped cross section, and the engaging part is adapted to pass through the first slot (20541) or the second slot (20542).
Embodiment 27: The interlocking and unlocking device as described in any preceding embodiment, wherein the transmission member (206) is constructed to be pivotable and comprises a leg part (2061) adapted to engage with the cam, and an end of the actuating core (203) is adapted to push against the transmission member (206).
Embodiment 28: The interlocking and unlocking device as described in any preceding embodiment, wherein it further comprises a seventh elastic member (2081), arranged on the operating shaft (208) so as to push the cam to return.
Embodiment 29: The interlocking and unlocking device as described in any preceding embodiment, wherein the unlocking mechanism further comprises a locking member (204), wherein the cam comprises a first engaging part adapted to act on the locking member (204), the unlocking mechanism further comprises a fifth elastic member (2043) for causing the locking member (204) to return, and the locking member (204) reciprocates under the action of the cam and the fifth elastic member (2043), wherein a first opening part (2041), and a second opening part (2042) of greater width than the first opening part (2041), are formed in the locking member (204); the first opening part (2041) is constructed to allow the actuating core (203) to pass therethrough but prevent rotation thereof, and the second opening part (2042) is constructed to allow the actuating core (203) to pass therethrough and allow the actuating core (203) and the unlocking key to rotate.
Embodiment 30: The interlocking and unlocking device as described in any preceding embodiment, wherein the cam further comprises a second engaging part (2072) adapted to act on the slider, and the first engaging part (2071) and the second engaging part (2072) are constructed so that: when the cam has already been moved to a position where the second engaging part (2072) is disengaged from the slider, the first engaging part (2071) is still able to engage with the locking member (204).
Embodiment 31: The interlocking and unlocking device as described in any preceding embodiment, wherein the first engaging part (2071) and the second engaging part (2072) are constructed as columnar parts protruding from a main body of the cam, and the columnar part serving as the first engaging part (2071) has a greater length than the columnar part serving as the second engaging part (2072).
Embodiment 32: The interlocking and unlocking device as described in any preceding embodiment, wherein the unlocking mechanism comprises a housing (212), the housing (212) being fixed below the partition plate (211), and components of the unlocking mechanism are arranged in the housing (212).
Embodiment 33: The interlocking and unlocking device as described in any preceding embodiment, wherein the interlocking mechanism further comprises a rotary rod (213), the slider (209) being coupled to the rotary rod (213) by means of a transmission component, wherein the limiting assembly (2101) is arranged on the rotary rod (213) so as to be able to swing between an extended position, in which the main switch trolley is limited, and a retracted position, as the rotary rod (5) rotates.
Embodiment 34: A switchgear, wherein the switchgear (100, 200) comprises a main switch trolley, a grounding switch, and the interlocking and unlocking device as described in any preceding embodiment.

## Claims

1. An interlocking and unlocking device for a main switch trolley and a grounding switch of a switchgear (100, 200), wherein the interlocking and unlocking device comprises:
an interlocking mechanism for locking the main switch trolley and the grounding switch, the interlocking mechanism comprising:
a first engaging member (12, 207) arranged on an operating shaft (15, 208) of the grounding switch so as to rotate therewith, wherein the operating shaft (15, 208) of the grounding switch is operably rotatable to control the grounding switch to open or close;
a second engaging member (10, 209) adapted to engage with or disengage from the first engaging member (12, 207); and
a limiting assembly (101, 2101), arranged at a guide rail of the main switch trolley and capable of limiting the main switch trolley,
wherein the second engaging member (10, 209) moves in linkage with the limiting assembly (101, 2101), to realize interlocking of the main switch trolley and the grounding switch when the first engaging member (12, 207) and the second engaging member (10, 209) are in an engaged state; and
an unlocking mechanism, for disengaging the first engaging member (12, 207) and the second engaging member (10, 209) from each other to realize unlocking of the main switch trolley and the grounding switch.

2. The interlocking and unlocking device as claimed in claim 1, wherein
the unlocking mechanism comprises an unlocking member (16, 201) and a transmission member (11, 206), wherein
the transmission member (11, 206) can be coupled to the unlocking member (16, 201), so as to move under the driving action of the unlocking member (16, 201), and drive the first engaging member (12, 207) away from the second engaging member (10, 209).

3. The interlocking and unlocking device as claimed in claim 2, wherein
the transmission member (11) is constructed as a sliding sleeve slidably fitted round the operating shaft (15), wherein
the first engaging member (12) is constructed as a first cam and coupled to the sliding sleeve so as to slide therewith;
the unlocking member (16) is constructed as an unlocking rod, wherein
a hollow chamber (151) is provided in the operating shaft (15) in an axial direction thereof, the unlocking rod being adapted to be pushed into the hollow chamber (151) or to withdraw therefrom; and
the unlocking rod is able to push the sliding sleeve in the process of being pushed into the hollow chamber (151).

4. The interlocking and unlocking device as claimed in claim 3, wherein
the unlocking mechanism further comprises an unlocking rod locking mechanism (14), the unlocking rod locking mechanism (14) comprising:
a second cam (141), fixed in relation to a housing of the switchgear; a rotary wheel (142), located at a radially inner side of the second cam (141) and fixed to the operating shaft (15); and
a first elastic member (144) and a first pin (143) arranged in radial through-holes of the rotary wheel (142) and the operating shaft (15), the first pin (143) being biased toward the second cam (141) by the first elastic member, and the first pin (143) having a radially outer end in contact with a radially inner cam surface of the second cam (141), and
a radially inner end adapted to limit the unlocking rod in a locked position.

5. The interlocking and unlocking device as claimed in claim 4, wherein
a main body part (1411) and a recessed part (1412) of larger internal diameter than the main body part are provided on the radially inner cam surface, the recessed part being positioned so that:
when the operating shaft (15) is in a position that causes the grounding switch to be open, the radially outer end of the first pin (143) abuts the recessed part (1412) and the radially inner end of the first pin does not limit the unlocking rod, and
when the operating shaft (15) is in a position that causes the grounding switch to leave the open state, the radially outer end of the first pin (143) abuts the main body part (1411) and the radially inner end of the first pin limits the unlocking rod in the locked position.

6. The interlocking and unlocking device as claimed in any preceding claim, wherein
the interlocking mechanism further comprises a rotary rod (5) and a fourth elastic member (7) for causing the rotary rod (5) to return, wherein
the limiting assembly (101) is arranged on the rotary rod (5), so as to be able to swing between an extended position, in which the main switch trolley is limited, and a retracted position, as the rotary rod (5) rotates, wherein
a first end of the second engaging member (10) is adapted to engage with or disengage from the first engaging member (12), and
a second end opposite the first end of the second engaging member (10) is coupled to the rotary rod (5).

7. The interlocking and unlocking device as claimed in claim 6, wherein
it further comprises an operating member (1) arranged near an end of the operating shaft (15) and able to be pressed down and return, the operating member (1) being coupled to the rotary rod (5) by means of a transmission component;
when the operating member (1) is pressed down, the rotary rod (5) is driven to rotate, and when the operating member (1) is released, the fourth elastic member (7) drives the rotary rod (5) to rotate so as to cause the operating member (1) to return;
when the operating member (1) is in a pressed-down state, the hollow chamber of the operating shaft (15) is exposed to enable insertion of the unlocking rod.

8. The interlocking and unlocking device as claimed in claim 7, wherein
a first blocking part (162) is provided on the operating member, and a second blocking part (163) is provided on the unlocking rod; in a state in which the unlocking rod has been inserted and the operating member has returned, the first blocking part (162) abuts the second blocking part (163), so as to block withdrawal of the unlocking rod from the hollow chamber.

9. The interlocking and unlocking device as claimed in any preceding claim, wherein
the first engaging member (207) is constructed as a cam, which is slidably fitted round the operating shaft (208) and rotates with the operating shaft (208), and
the second engaging member (209) is constructed as a slider capable of sliding under the action of the cam, wherein the slider moves in linkage with the limiting assembly (2101).

10. The interlocking and unlocking device as claimed in any of claims 2 - 9 , wherein
the unlocking member (201) is constructed as a rotatable unlocking key, and the unlocking mechanism further comprises a guide sleeve (202) with a channel formed therein for the unlocking key, and an actuating core (203) arranged on the guide sleeve, wherein
the unlocking key is adapted to pass through the channel and engage with the actuating core (203), and the actuating core (203) is able, under the operating action of the unlocking key, to push the transmission member (206) to drive the first engaging member (207).

11. The interlocking and unlocking device as claimed in claim 10, wherein
the unlocking mechanism is arranged below a partition plate (211) of a compartment where the main switch trolley is located, and located at the same side of the guide rail (210) as the main switch trolley, wherein
the unlocking mechanism comprises a control assembly (205) capable of controlling operation of the unlocking key according to a position of the main switch trolley, the control assembly (205) comprising a rolling wheel (2051) capable of at least partially projecting to the region above the partition plate, a sixth elastic member (2052) which biases the rolling wheel (2051) toward the main switch trolley, and a blocking member (2053) adapted to enter or leave the channel, wherein,
when the main switch trolley is in the test position, the rolling wheel is pressed down by the main switch trolley, driving the blocking member (2053) to leave the channel, and thereby allowing the unlocking key to enter the channel.

12. The interlocking and unlocking device as claimed in claim 11, wherein
the control assembly (205) further comprises
a limiting plate (2054) coupled to the rolling wheel (2051);
a first slot (20541) and a second slot (20542) of smaller width than the first slot are formed on the limiting plate (2054), wherein,
when the main switch trolley is in the test position, the rolling wheel is pressed down, and the actuating core (203) passes through the first slot (20541), allowing the actuating core (203) and the unlocking key to rotate; when the main switch trolley is not in the test position, the rolling wheel is sprung up by the sixth elastic member (2052), and the actuating core (203) passes through the second slot (20542), preventing rotation of the actuating core (203) and the unlocking key.

13. The interlocking and unlocking device as claimed in any one of claims 10 - 12, wherein
the unlocking mechanism further comprises a locking member (204), wherein
the cam comprises a first engaging part adapted to act on the locking member (204), the unlocking mechanism further comprises a fifth elastic member (2043) for causing the locking member (204) to return, and the locking member (204) reciprocates under the action of the cam and the fifth elastic member (2043), wherein
a first opening part (2041), and a second opening part (2042) of greater width than the first opening part (2041), are formed in the locking member (204); the first opening part (2041) is constructed to allow the actuating core (203) to pass therethrough but prevent rotation thereof, and the second opening part (2042) is constructed to allow the actuating core (203) to pass therethrough and allow the actuating core (203) and the unlocking key to rotate.

14. The interlocking and unlocking device as claimed in claim 13, wherein
the cam further comprises a second engaging part (2072) adapted to act on the slider, and the first engaging part (2071) and the second engaging part (2072) are constructed so that:
when the cam has already been moved to a position where the second engaging part (2072) is disengaged from the slider, the first engaging part (2071) is still able to engage with the locking member (204).

15. A switchgear, wherein
the switchgear (100, 200) comprises a main switch trolley, a grounding switch, and the interlocking and unlocking device as claimed in any one of claims 1 - 14.
